(19) Europäisches Patentamt

European Patent Office

Office européen des brevets

(11) **EP 1 008 112 B1**

(12) **EUROPEAN PATENT SPECIFICATION**

(45) Date of publication and mention
of the grant of the patent:
**02.03.2005 Bulletin 2005/09**

(51) Int Cl.⁷: **G06T 17/50**, G06T 17/10,
G06T 17/20, G06T 17/40

(21) Application number: **97927964.3**

(22) Date of filing: **03.06.1997**

(86) International application number:
**PCT/US1997/009627**

(87) International publication number:
**WO 1997/046975 (11.12.1997 Gazette 1997/53)**

(54) **TECHNIQUES FOR CREATING AND MODIFYING 3D MODELS AND CORRELATING SUCH MODELS WITH 2D PICTURES**

VERFAHREN ZUR ERZEUGUNG UND ÄNDERUNG VON 3D MODELLEN UND KORRELATION VON SOLCHEN MODELLEN MIT 2D BILDERN

PROCEDE DE CREATION ET DE MODIFICATION DE MODELES TRIDIMENSIONNELS ET DE MISE EN CORRELATION DE TELS MODELES AVEC DES IMAGES BIDIMENSIONNELLES

(84) Designated Contracting States:
**DE FR GB**

(30) Priority: **04.06.1996 US 19400 P**
**19.05.1997 US 47062 P**
**23.05.1997 US 862417**
**02.06.1997 US 867013**

(43) Date of publication of application:
**14.06.2000 Bulletin 2000/24**

(73) Proprietor: **Adobe Systems Incorporated**
**San Jose, California 95110-2704 (US)**

(72) Inventor: **Muncey, Grant J.**
**San Jose, CA 95129 (US)**

(74) Representative: **Müller-Boré & Partner**
**Patentanwälte**
**Grafinger Strasse 2**
**81671 München (DE)**

(56) References cited:
WO-A-88/04804      US-A- 4 888 713
US-A- 5 255 352     US-A- 5 511 153
US-A- 5 533 177     US-A- 5 633 995

• DATA SOURCES REPORT, VISLAB (V.1.4), December 1995, "Computer Select Software Specification".
• DATA SOURCES, ALIAS DESIGNER (V.7.0), December 1995, "Computer Select Software Product Specification".
• DATA SOURCES, FREED, December 1996, "Computer Select Software Product Specification".
• COMPUTER VISION AND PATTERN RECOGNITION, 1994, LAM et al., "Emerging Hypothesis Verification Using Function-Based Geometric Models and Active Vision Strategies".
• IEE COLLOQ., No. 092: NEW DEVELOPMENTS IN 3D IMAGE CAPTURE & APPLICATIONS, 1995, JONES et al., "A New Shape Representation for Fast 3D Reconstruction from Multiple 2D Perspective Images".
• IMAGE PROCESSING 1994 INTERNATIONAL CONFERENCE, 1994, LAVEST et al., "Reconstruction by Zooming from Implicit Calibration".
• IEE COLLOQ., (1990), No. 087: ELECTRONIC IMAGES AND IMAGE PROCESSING, 1990, DUFFY, "Computer Reconstruction of 2-D Photographs from Alternative Viewpoints".

**Description**

**BACKGROUND OF THE INVENTION**

The present invention relates generally to computer graphics, and more specifically to techniques for working with three-dimensional (3D) objects and two-dimensional (2D) images.

Psychologists and philosophers have agreed for some time now that humans are not mere passive receivers of discrete bits of sense data. Rather, perception is automatically focused. We perceive things against background ("figure" against "ground," in Gestalt terminology). Perception is, by its very nature, perception of something. At any point in time, we attend to some particular elements in our perceptual field, and not others; we do not give equal attention to every element. In this sense, selectivity in perception is natural; and it would be unnatural and pathological, for example, simultaneously to actend to every possible point in one's visual field.

This may seem a commonplace. Everyone knows it, but thinks that, regrettably, we must ignore it when we create or manipulate images. When a photographer takes a picture of something, or a television displays an image of something, the nature of the medium forces every point to be rendered - the object as well as the background, the figure as well as the ground. Likewise, current digital image editing packages force users to think and work at the level of image pixels; and all pixels, whether figure and ground, are created equal.

Yet the number of digitized images is huge and rapidly growing. Many computer users now manipulate digitized images, especially digitized photographs. A photograph is two-dimensional (2D), of course. The vast majority of computerized 2D images are simply arrays of undifferentiated pixels. But there is increasing demand for 3D models. Whole libraries of images (line art to fine art) wait to be digitized and then become 3D. In addition, entertainment and game markets increasingly demand original 3D models.

Current user interface limitations, however, make it extremely complicated to produce 3D models. The usual method is to model the object mathematically from scratch with specialized, complicated software, and then apply texture mapping to the surfaces. These processes require substantial technical expertise and expensive software; even so, the results often appear unrealistic.

**SUMMARY OF THE INVENTION**

The present invention allows a user to interact with two-dimensional (2D) images and three-dimensional (3D) modeled objects in an intuitive way, and to move seamlessly between the largely separate worlds of 2D image editing and 3D modeling. The user is able, by performing simple actions, to perform difficult tasks such as extracting a 3D object (creating a 3D model) from a 2D representation and manipulating the 3D object (possibly in a 2D representation of a 3D scene), and placing modeled 3D objects in 2D representations of 3D scenes.

In short, the invention recognizes, and exploits, the human user's natural, intuitive grasp of a 2D picture as a representation of something. A user doesn't have to be a mathematician to understand most unambiguous representational images. Most 2D pictures already contain a great deal of information about the 3D properties of the items depicted, and even children can readily convey that information. In this application, the term "2D picture," or simply "picture," will normally be taken to encompass a wide variety of 2D representations of 3D space. For example, the 2D picture can be a bitmap image corresponding to a digitized photograph of a physical scene, a rendered 2D projection of a 3D computer model of a scene, or simply line art representing a 3D scene.

The present invention relates to an interactive computer environment as set out in claim 1.

In operation, the user provides input for establishing a mapping between distinctive elements of a desired 3D modeled object and corresponding elements in the picture. These elements may be distinctive points or edges, or a combination of the two. The user places control elements of a desired 3D modeled object at desired locations or orientations in a 2D picture. The invention responds to such control element placement by determining parameters relating to at least one of shape, orientation, and position of the modeled object in 3D space, and projecting at least some elements of the modeled object onto a plane, normally referred to as the image plane.

According to an aspect of the invention, in one embodiment, portions of the 2D picture are associated with visible surface portions of the modeled object as projected onto the image plane. As the user manipulates the object, as for example by translating or rotating it, the portions of the picture remain associated with the surface portions of the object in its new position or orientation. As the surface portions of the modeled object change, the associated portions of the picture are preferably transformed in a like manner. Thus, when the picture includes a representation of a 3D object, and the control elements are placed at locations in the picture that represent the corresponding elements of the displayed object, the modeled object takes on the appearance of the object represented in the picture. The result is that the user can, in effect, select the 2D representation of the object, pull it out of the scene, and manipulate it as a 3D object.

According to a further aspect of the invention, in a specific embodiment, the user interacts with a lower-resolution, grayscale version of the original image. This reduces memory requirements and speeds up rendering when the user manipulates the 3D model. When the desired manipulations have been completed, the user can specify that the 3D model be rendered at the same resolution and bit-depth as the original image.

According to yet a further aspect of the invention, in another embodiment, when the picture includes a representation of a desired environment (scene) for the modeled object, and the control elements are placed at locations or orientations that are 2D representations of desired 3D locations or orientations in the scene for the control elements, the modeled object is, in effect, placed in the scene and displayed with its control elements at the desired locations.

The user input for establishing the mapping from the 3D object's control elements to the locations in the 2D picture can take various forms. In specific embodiments, the modeled object is displayed in wireframe with highlighted control points (sometimes referred to as handles), and the user places the control points by dragging each handle to the desired location relative to the picture. Alternatively, the user could drag edges of the modeled object to desired locations in the picture. In these implementations, the user specifies each control element individually, then specifies its location in the picture, and then repeats for the additional control elements. That is, the specification of control points is interleaved with the placement of control points. A somewhat different paradigm entails specification of the control elements in a first sequence, followed by specification of the desired locations in the scene in a second, subsequent, sequence. Indeed, if the control elements of the 3D object are specified by default, the user would only need to specify the locations in the picture to establish the mapping.

There are a number of ways that the system can respond in the event that the user's specified mapping is not consistent with projection of the modeled object onto the image plane (the plane of the picture). For example, where the system displays the modeled object as a wireframe with highlighted control points, the system can cease displaying the edges, thereby providing a visual clue that the attempted placement of a control point is invalid. Alternatively, the system can convey an explicit warning.

A detected inconsistency of the user's control point placement may be due to the fact that one or more of the picture's stored projection parameters (center point and field of view angle) are different from the picture's actual parameters. Since the system preferably allows the projection parameters to be adjusted, the user may find it appropriate to adjust the projection parameters.

A further understanding of the nature and advantages of the present invention may be realized by reference to the remaining portions of the specification and the drawings.

## BRIEF DESCRIPTION OF THE DRAWINGS

Fig. 1 is a block diagram of a computer system embodying the present invention;

Figs. 2A - 2G provide a series of views illustrating user interactions for the purpose of creating a 3D model of a box from a single 2D image;

Figs. 3A and 3B provide a series of views illustrating user interactions for the purpose of manipulating the 3D model;

Figs. 4A - 4E illustrate the basic geometrical framework of the perspective projection that is used in the invention;

Figs. 5A - 5C show how a program embodying the present invention determines the position and orientation of a rectangular solid;

Figs. 6A - 6C show how the program determines the position and orientation of a solid of revolution;

Figs. 7A - 7C show how the program determines the position and orientation of a sphere;

Fig. 8 shows an overhead view of a 3D model of a box being modeled;

Fig. 9 is a representation of the construction mode tool bar;

Fig. 10 is a representation of the construction mode tool bar;

Fig. 11 shows the operation of the camera movement tools;

Fig. 12 presents a table showing the cursor appearance when different tools are selected;

Figs. 13A and 13B provide a series of views illustrating user interactions for the purpose of creating a 3D model of a cylinder from a single 2D image;

Figs. 14A - 14D provide a series of views illustrating user interactions for the purpose of creating a 3D model of a complex solid of revolution from a single 2D image;

Figs. 15A - 15C provide a series of views illustrating user interactions for the purpose of placing a 3D model into a 2D representation of a 3D scene;

Fig. 16A is a flowchart showing the program's initialization activities;

Fig. 16B is a flowchart showing the program's main event loop;

Fig. 16C is a flowchart showing the program's tool bar handler; and

Figs. 17A - 17C show how information about relationships between objects can be used to provide additional positional information.

**DESCRIPTION OF SPECIFIC EMBODIMENTS**

1. Introduction

1.1 Software Overview

The present invention is implemented in a computer program, referred to as FreeD (or sometimes as the program), which allows a user to construct 3D models from single images. The current implementation of the program is a plug-in for the well-known image editing program marketed by Adobe Systems Incorporated of San Jose, California under the mark Photoshop. The program is currently available in Macintosh (MacOS) and Windows versions from Cognicon, Inc. of San Jose, California. The program is written in the C++ programming language, but other programming languages would be suitable.

The description that follows will first include a hardware overview, followed by a description of some basic user interactions. The underlying projective transformation technology will then be described, followed by specific implementation features and details.

1.2 Hardware Overview

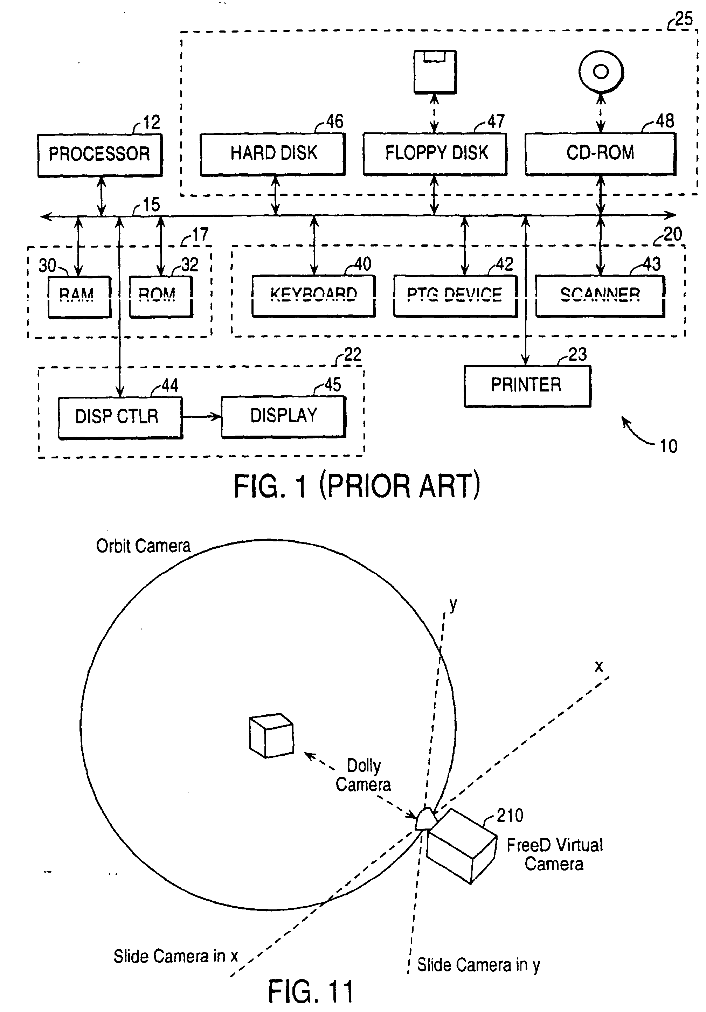

Fig. 1 is a simplified block diagram of a computer system 10 in which the present invention may be embodied. The present invention is implemented in a computer program, referred to as FreeD, which allows a user to construct 3D models from single images. The computer system configuration illustrated at this high level is standard, and as such, Fig. 1 is labeled "Prior Art." A computer system such as system 10, suitably programmed with a program such as FreeD to embody the present invention, however, is not prior art.

In accordance with known practice, the computer system includes a processor 12 that communicates with a number of peripheral devices via a bus subsystem 15. These peripheral devices typically include a memory subsystem 17, a user input facility 20, a display subsystem 22, output devices such as a printer 23, and a file storage system 25.

In this context, the term "bus subsystem" is used generically so as to include any mechanism for letting the various components of the system communicate with each other as intended. With the exception of the input devices and the display, the other components need not be at the same physical location. Thus, for example, portions of the file storage system could be connected via various local-area or wide-area network media, including telephone lines. Similarly, the input devices and display need not be at the same location as the processor, although it is anticipated that the present invention will most often be implemented in the context of PCs and workstations.

Bus subsystem 15 is shown schematically as a single bus, but a typical system has a number of buses such as a local bus and one or more expansion buses (e.g., ADB, SCSI, ISA, EISA, MCA, NuBus, or PCI), as well as serial and parallel ports. Network connections are usually established through a device such as a network adapter on one of these expansion buses or a modem on a serial port. The computer system may be a desktop system or a portable system.

Memory subsystem 17 includes a number of memories including a main random access memory (RAM) 30 and a read only memory (ROM) 32 in which fixed instructions are stored. In the case of Macintosh-compatible personal computers this would include portions of the operating system; in the case of IBM-compatible personal computers, this would include the BIOS (basic input/output system).

User input facility 20 typically includes a keyboard 40 and may further include a pointing device 42 and a scanner 43. The pointing device may be an indirect pointing device such as a mouse, trackball, touchpad, or graphics tablet, or a direct pointing device such as a touchscreen incorporated into the display. Other types of user input devices, such as voice recognition systems, are also possible.

Display subsystem 22 typically includes a display controller 44 and a display device 45 coupled to the controller. The display device may be a cathode ray tube (CRT), a flat-panel device such as a liquid crystal display (LCD), or a projection device. Display controller provides control signals to the display device and normally includes a display memory (not shown in the figure) for storing the pixels that appear on the display device. The display subsystem may also provide non-visual display such as audio output.

The file storage system provides persistent (non-volatile) storage for program and data files, and typically includes at least one hard disk drive 46 and at least one floppy disk drive 47. There may also be other devices such as a CD-ROM drive 48 and optical drives. Additionally, the system may include hard drives of the type with removable media cartridges. As noted above, one or more of the drives may be located at a remote location, such as in a server on a local area network or at a site on the Internet's World Wide Web.

2. <u>Basic User Interactions</u>

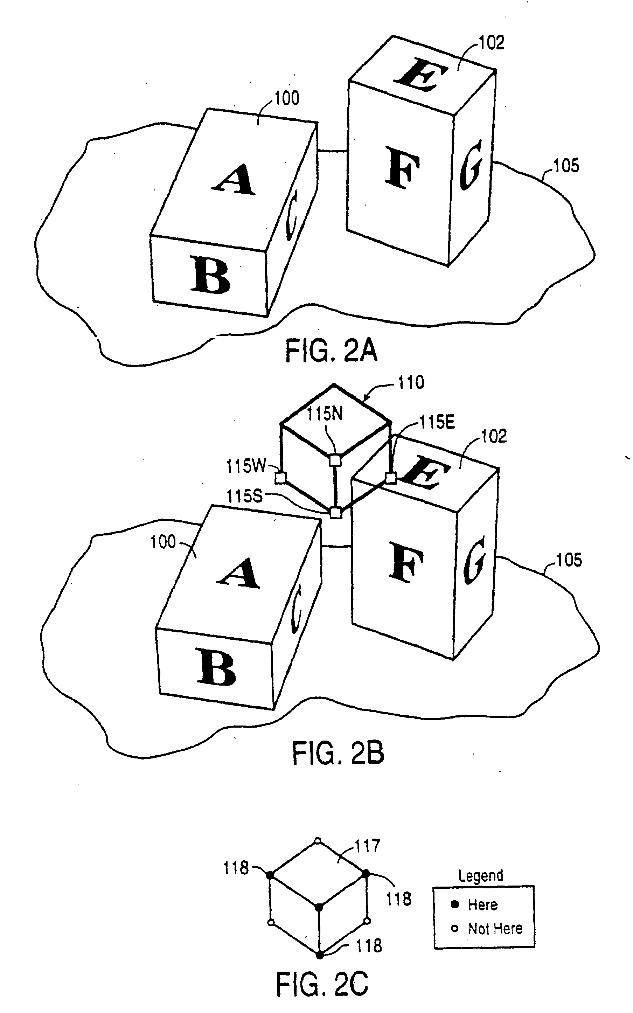

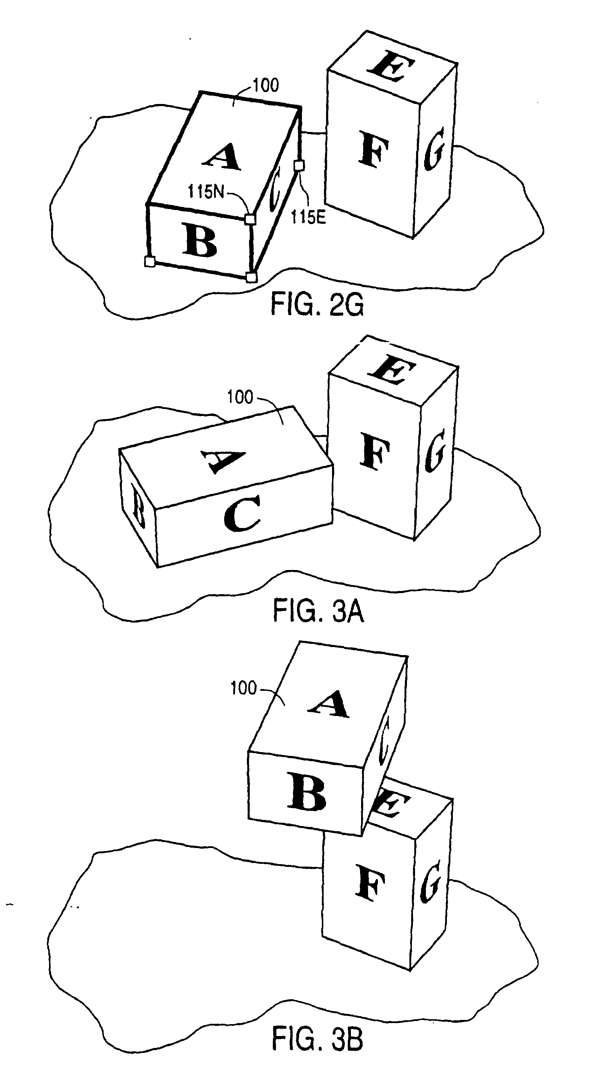

As mentioned above, the present invention is implemented in a computer program, referred to as FreeD, which allows a user to construct 3D models from single images (typically, but not necessarily, scanned photographs). The basic operation from the user's point of view will be described in connection with two tasks, first, creating a 3D model from a single 2D image (Figs. 2A - 2G), and second, manipulating the 3D model to change its location or orientation relative to the scene depicted in the 2D image (Figs. 3A and 3B). The drawings illustrating these two sequences will be line art representing bitmap screen shots that appear on the display. The image for this initial description is an image of a pair of rectangular boxes. Other geometries will be described in later sections.

In general, the user manipulates input devices with reference to the screen image in order to effect desired changes. This is typically done by placing a cursor at a particular position on the screen that corresponds to the displayed location of an object to be modified, and executing one or more user events such as keystrokes or mouse actions. Mouse actions include button depression, button release, mouse movement, clicks, and drags. A mouse click refers to the user depressing and releasing one of the buttons without moving the mouse, but the term is also used to refer to the act of depressing one of the buttons. A drag (or sometimes click-and-drag) refers to the user positioning the cursor with the mouse, depressing one of the buttons, moving the mouse to a new position with the button still down, and releasing the button at the new location. The effect of mouse button depressions, mouse button releases, clicks, and drags may be modified by holding down a keyboard key or a different mouse button (if present). References to mouse actions are for illustration only, it being understood, as discussed above, that other types of input devices and other types of pointing devices can be used.

In connection with the initial description of the user interactions, reference will be made to entering various modes. A detailed description of these modes and various other features of a representative embodiment will be provided in later sections.

Also, for purposes of this initial description, it will be assumed that FreeD's internal geometric parameters are consistent with the geometric parameters imposed by the camera used to take the picture. A detailed description of adjusting these parameters will be provided in later sections.

2.1 <u>Creating a 3D Model from a 2D Image</u>

Fig. 2A represents a 2D image of a pair of 3D boxes 100 and 102 in a 3D scene suggested by an arbitrary scene fragment 105. The boxes are sometimes referred to as the pictured boxes. While the boxes are mentioned as being in a scene, which is typical of most photographs, FreeD can operate with images of objects against plain backgrounds.

As is inherent with projected images of boxes, no more than three of the six surfaces are visible. Further, portions of some or all of the surfaces may be hidden by other objects in the scene. The present invention allows the user to interact with the image, create a 3D model of the pictured box, and manipulate the 3D model. For purposes of this initial discussion, it will be assumed that FreeD's internal representation of camera settings on which it bases its projective geometry calculations is in accord with the camera settings that were used (in the case of a photograph) or assumed (in the case of a rendered image) to generate the image. User adjustments of camera settings will be discussed in later sections.

In a specific embodiment, the program generates a lower-resolution, grayscale image corresponding to the original image. It is this image, referred to as the construction-mode image, with which the user interacts. This is done primarily for reasons of memory requirements and speed when the user manipulates the 3D model, since the model needs to be rendered to the screen when any of its geometrical parameters are changed. When the user has finished any desired manipulations, the user can specify that the 3D model be finally rendered at the same resolution and bit-depth as the original image.

Fig. 2B represents the screen after the user has invoked a mode (referred to as the construction mode) for creating a 3D box. As can be seen, a small line drawing of a projected 3D box 110, referred to as the cage, appears superimposed on the screen image at a default location. In this line art representation, cage 110 is drawn in thick black lines. In the current implementation of FreeD, the cage is displayed in thin green lines when active. The cage can be viewed as a template.

The cage appears as viewed diagonally from a point in front of and above the cage, and only the visible edges are displayed. The cage has four small squares, three at the visible bottom corners and one at the top of the nearest edge. The small squares are referred to as handles, and the four handles are sometimes referred to as the north, south, east, and west handles, according to the usual compass points. The handles are shown with reference numerals 115N, 115S, 115E, and 115W so as to be consistent with this terminology. The displayed cage is a representation of the 3D model. In order to create a 3D model corresponding to the pictured box in the scene, the user manipulates the handles to place them over corresponding corners of the pictured box.

The user can click and drag on a handle, which results in resizing the edges or changing the included angles. The user can click and drag on one of the edges of the cage to select and move the whole cage. In general, the handles can be positioned in any order and when a handle is dragged, the other handles remain in their original positions.

There are many ways for the user to fit the cage to the pictured 2D box, as for example, finding a point on the pictured box where 3 edges can be seen to meet. Depending on the orientation of the box and possible other objects in the scene, certain of these characteristic points on the box may be obscured. Fig. 2C shows a representation of a box 117 with certain corners 118 indicated as suitable candidates.

It should be noted that when the handles are positioned such that they do not correspond to the corners of a properly projected rectangular solid, only the handles and their connecting lines are displayed. In such a case, the handles or lines may also be displayed in a different color. However, once the handles are positioned to provide enough information to define a 3D rectangular solid, all visible edges of the cage, corresponding to a properly projected rectangular solid, will again be displayed.

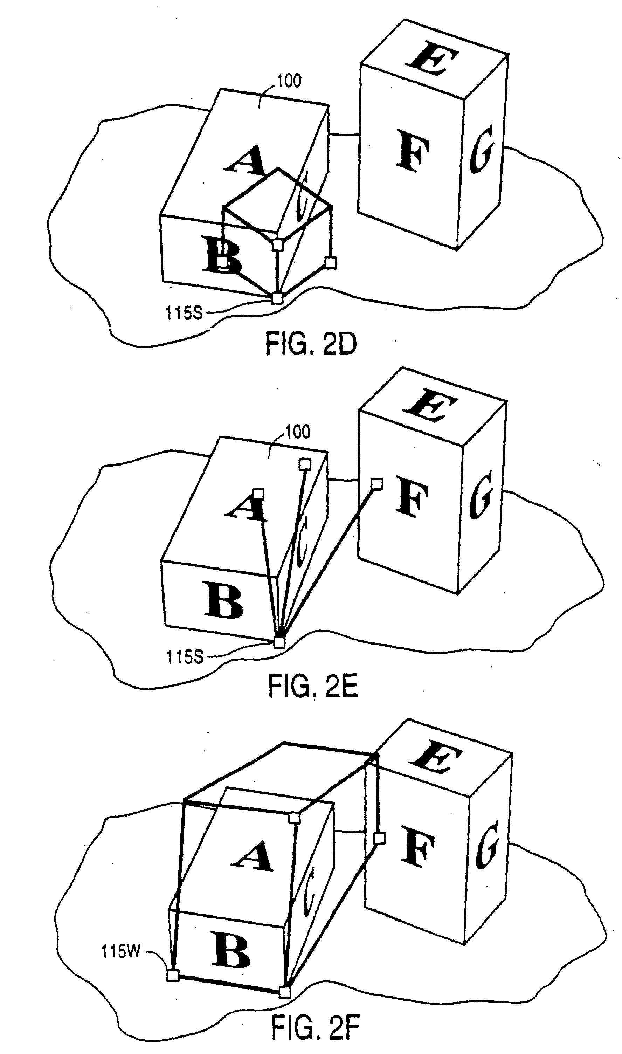

Figs. 2D - 2G show a sequence of views representing possible results of user actions in positioning the handles at respective corners of box 100. Fig. 2D shows the approach of moving the whole cage to position south handle 115S on the corresponding corner of the pictured box. Fig. 2E shows an alternative where the user has merely dragged south handle 115S into position, thereby deforming the cage to where ic no longer represents a properly projected rectangular solid. Fig. 2F shows west handle 115W having then been positioned to align with the bottom edge of pictured box 100. At this point, the positions of the handles are such that they do correspond to a properly projected rectangular solid, but they do not correspond to the pictured box.

Fig. 2G shows the north and east handles 115N and 115E having been subsequently positioned on the corresponding corners of pictured box 100. It should be noted that a handle can be positioned on a hidden corner. In this situation, the user positions the handle until the lines of the displayed cage provide a visually acceptable fit to the visible edges of the pictured box.

2.2 Manipulating the 3D Model in the Scene

Once the handles have been positioned so that the wireframe view of cage 110 corresponds to the pictured box, the user can switch to a mode (referred to as the manipulation mode) where the 3D model can be translated and rotated. Fig. 3A shows the result after the user has rotated the 3D model of box 100. It is noted that the rotation may result in revealing areas of the box not originally shown. In at least one implementation, there is no attempt to fill these areas, and they are displayed as gray. Fig. 3B shows the result after the user has translated the 3D model of the box without rotating it.

When the user moves the modeled 3D box, the portions of the image that correspond to the faces of the pictured box are mapped onto the corresponding faces of the 3D model (the cage). To the extent that the cage has been well fit to the pictured box, the appearance of the model as it is moved is like the appearance that the box would have if it were moved in real life. Conversely, if the user had made no attempt to position the cage on the pictured box, the model would have surfaces that corresponded to whatever pixels were within the faces of the cage, and would not appear like the pictured box.

3. Underlying Technology

The techniques are applicable to images that have been formed using a simple perspective projection such as that used by most cameras. FreeD's operation includes performing projective geometry calculations based on stored camera settings. References to FreeD's virtual camera will be with reference to the stored camera settings that are used to perform the calculations.

3.1 Definitions

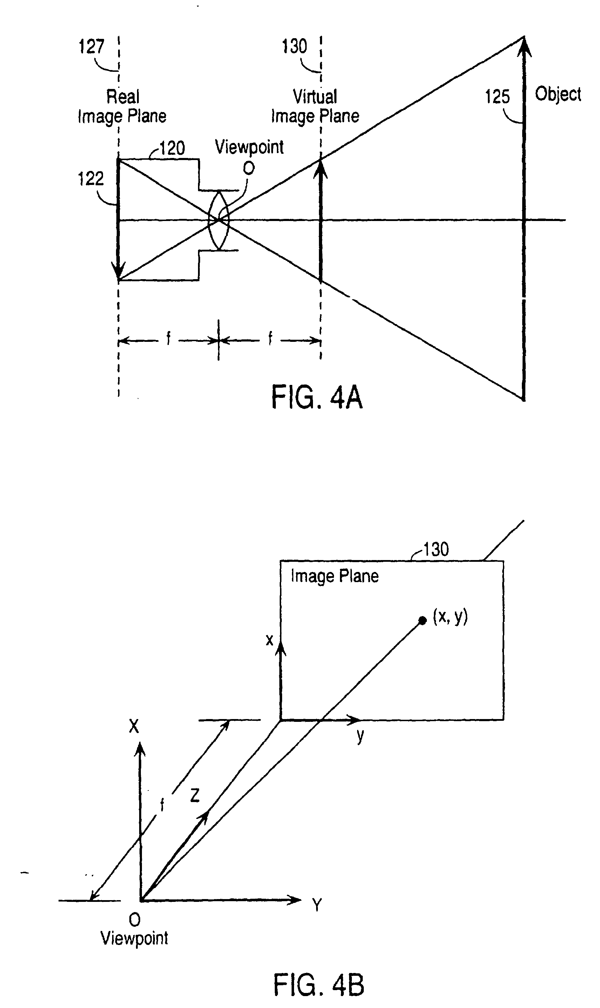

Figs. 4A - 4E illustrate the basic geometrical framework of the perspective projection that underlies and is used in the specific embodiment of the invention. A number of the definitions below are with reference to these figures.

Figs. 4A and 4B show the coordinate system used to describe how a camera 120 forms an image 122 of an object 125 in a real image plane 127. The center of the camera lens (marked as O in the figures) is referred to as the viewpoint. An object in front of the viewpoint is imaged by the camera in real image plane 127 at a focal distance f behind the lens. This focal distance would be the same as the focal length of the camera lens if it were focused at infinity. It is convenient to define a virtual image plane 130 at a distance f in front of the viewpoint, and references to the image plane will normally refer to the virtual image plane. A point in image plane 130 will be referred to as an image point and a line in the image plane as an image line. A point in 3D space will be referred to as a space point and a line in 3D space as a space line.

The (x, y) coordinates in the image plane are in terms of a 2D coordinate system where x increases upward and y increases to the right as seen from the camera viewpoint. The origin of this system will be located at the point where the center of the camera view pierces the image plane (i.e., where the optical axis of the lens intersects the image plane). The (X, Y, Z) coordinates in space are in terms of a 3D coordinate system having its origin at the camera viewpoint. X increases in an upward direction, Y increases to the right, and Z increases in a direction away from the viewpoint toward the scene. The 3D coordinate system is "right-handed."

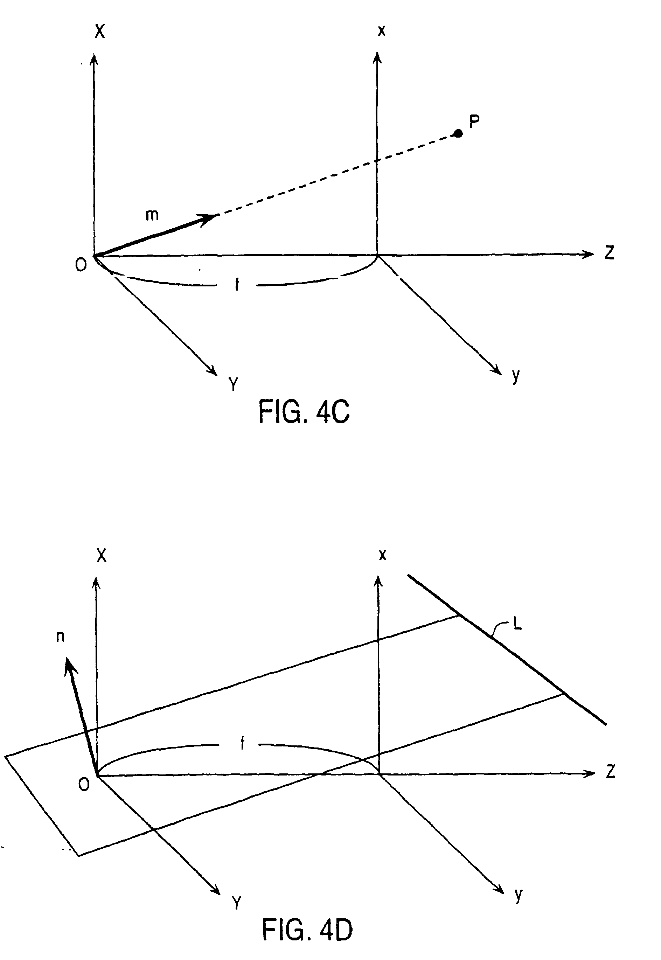

Figs. 4C and 4D illustrate so-called N-vectors, which are used in the perspective geometry. Reference to a vector means a "three-dimensional column vector of real components" unless otherwise stated. Vectors will be written (a, b, c). Reference to a matrix means a "three-dimensional square matrix of real components" unless otherwise stated. Matrices will be written [row 1 column 1, row 1 column 2, row 1 column 3, ... , row 3 column 3].

The notation N[u] represents the normalization of the vector u as follows: $N[u] = u / ((u_1^2 + u_2^2 + u_3^2)^{1/2})$.

The notation u • v represents the dot product of u and v and is equal to: $u_1v_1 + u_2v_2 + u_3v_3$.

The notation u $\times$ v represents the cross product of u and v and is equal to: $((u_2v_3 - u_3v_2), (u_3v_1 - u_1v_3), (u_1v_2 - u_2v_1))^T$.

The notation u $\otimes$ v represents the tensor product of u and v and is equal to the matrix:

$[u_1v_1, u_1v_2, u_1v_3, u_2v_1, u_2v_2, u_2v_3, u_3v_1, u_3v_2, u_3v_3]$.

Fig. 4C shows the N-vector, m, of an image point P, as the normalized vector which points from the camera viewpoint to image point P. Thus, the N-vector of a point (x, y) in the image plane is $N[(x, y, f)^T]$. Fig. 4D shows the N-vector, n, of an image line L as the normal to the plane formed by the camera viewpoint and intersecting the image plane along the image line (i.e., normal to the plane that contains the viewpoint and the image line). Thus, the N-vector of an image line whose equation is Ax + By + C = 0 is $N[(A, B, C/f)^T]$.

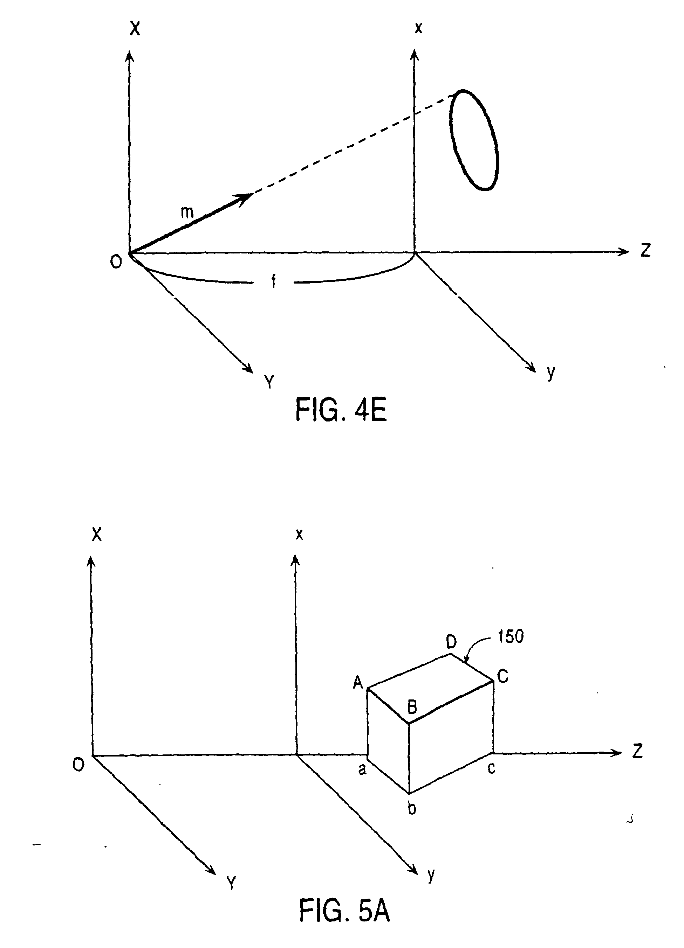

Fig. 4E shows how a quadratic curve in the image plane is represented. A quadratic curve in the image plane (a conic) with a three dimensional square symmetric matrix. The equation of a quadratic in the image plane is:

$$Ax^2 + 2Bxy + Cy^2 + 2(Dx + Ey) + F = 0 \qquad (1)$$

The equation re-written in terms of N-vector $m = \pm N[(x, y, f)^T]$ is:

$$m \cdot Qm = 0, Q = k [ A, B, D/f, B, C, E/f, D/f, E/f, F/f^2 ] \qquad (2)$$

k is an arbitrary non-zero constant. Unless otherwise stated, it will be assumed that k is picked to scale the matrix so that its determinant is -1.

### 3.2 Geometry of Perspective Projection

The equation that relates image points to space points is the perspective projection:

$$x = f (X/Z), y = f (Y/Z) \qquad (3)$$

where (x, y) are the coordinates of a 2D location on an image, (X, Y, Z) are the coordinates of the location in 3D space that maps to (x, y), and f is the focal distance of the camera lens.

An eventual goal is to determine the (X, Y, Z) values of 3D points from their (x, y) projections in the image plane. From Eq. (3) it can be seen that this cannot be done directly since not enough information is present in the 2D image. The projective transform has flattened out the third dimension. Obtaining (X, Y, Z) requires more information than just (x, y). This information is obtained by using known relationships between the projections of multiple 3D points.

### 3.3 Projections of Three Orthogonal Space Lines

The projections of three orthogonal space lines in the image plane can be used to obtain 3D information. This is important because many objects contain this kind of feature. A corner of a rectangular solid is a good example. Let the three spaces lines with directions m, m', and m'' have image plane projections of p, p', and p''. Let the N-vectors of p, p', and p'' be n, n', and n''. The direction of space line m is the intersection of its image plane projection, p, with the conic:

$$Q = (n' \cdot n'')I - ((n' \otimes n'') + (n'' \otimes n')) / 2 \tag{4}$$

where I is a 3 x 3 identity matrix. Note that in this case the determinant of Q is not normalized to -1.

The intersection of Q with n (the N-vector of r) is the direction of the space line m, which may have zero, one, or two solutions as follows:

1. Compute $u = N[n \times (0, 0, 1)^T]$
2. If $N[Qu] = \pm n$, then the single solution is u.
3. Compute $v = N[n \times Qu]$.
4. If $v = \pm u$, then u is one solution. To get the other solution u is set to $u + en \times u$ for an arbitrary non-zero value of e and the procedure is restarted at step 2.
5. If $(u \cdot Qu)(v \cdot Qv) > 0$, then there are no solutions.
6. Solutions 1 and 2 are $N[u(|v \cdot Qv|)^{1/2} \pm v(|u \cdot Qu|)^{1/2}]$.

If there are no solutions from the procedure above, then the space lines cannot be interpreced as being orthogonal to each other. Otherwise, for each value of m from above, calculate the other two values m' and m'' as follows:

7. $m' = N[n' \times m]$
8. $m'' = N[n'' \times m]$

3.4 <u>The Projection of a Circle</u>

The projection of a space circle in the image plane can also be used to obtain 3D information. Many objects are solids of revolution and thus have circular defining features. A can is a good example. A space circle projects onto the image plane as an ellipse (except in the special case where the circle is "edge on" in which case it projects to a line). There is a closed form solution for obtaining the orientation and center of a space circle given its ellipse image projection.

First the equation of the image ellipse must be obtained. There are standard techniques for obtaining the parameters A through F for Eqs. (1-2). Let conic Q, Eq. (2) be the projection of a space circle of radius r. Obtain the eigenvalues of Q and call them lamda1, lamda2, and lamda3 such that (lamda3 < 0 < lamda1 s lamda2). Also let u2 and u3 be the unit eigenvectors for lamda2 and lamda3. The unit surface normal for the plane on which the space circle lies is:

$$n = sqrt((lamda2 - lamda1) / (lamda2 - lamda3)) \; u2 +$$

$$sqrt((lamda1 - lamda3) / (lamda2 - lamda3)) \; u3. \tag{5}$$

The distance of the center of the space circle from the eye is:

$$d = lamda1^{3/2} \; r. \tag{6}$$

The N-vector m of the projected center of a space circle, given Q, its conic projection, and n, its supporting plane orientation is:

$$m = \pm N[Q^{-1} \; n]. \tag{7}$$

3.5 <u>The 3D Position and Orientation of a Rectangular Solid</u>

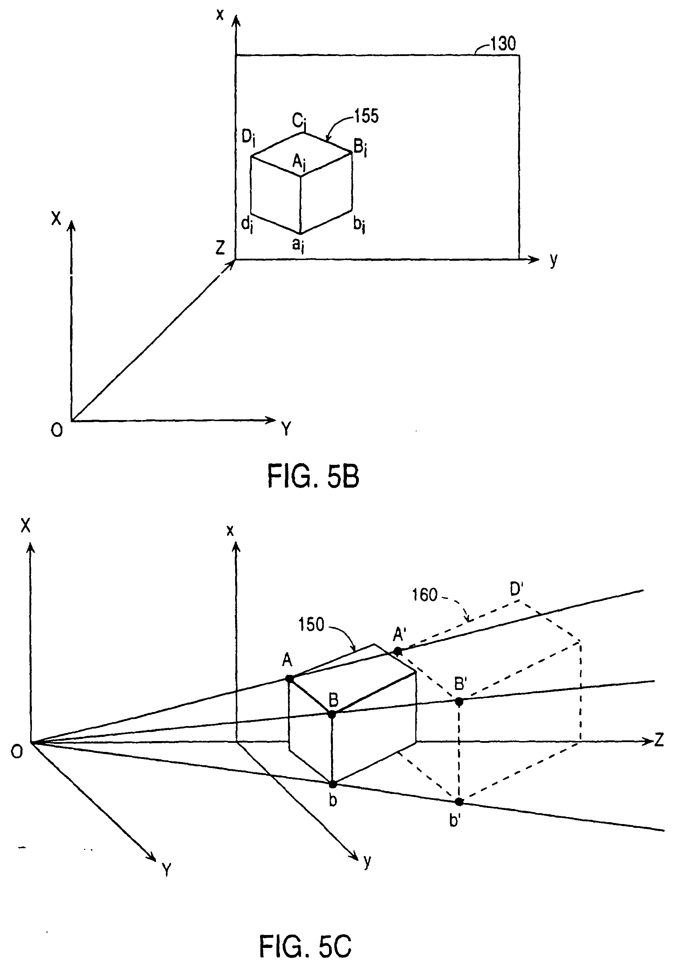

Figs. 5A and 5B show how the program determines the position and orientation of a rectangular solid 150 based on its projection in the image plane. In most cases the 2D projected image of a 3D rectangular solid presents several sets of three mutually perpendicular edges.

Fig. 5A shows a representation of rectangular solid 150 that is somewhat above the viewpoint and angled so that from the viewpoint the upper surface is still visible. The figure also represents looking at the rectangular solid from a point displaced from the viewpoint. The four vertices (space points) on the upper surface are labeled A, B, C, and D, and the corresponding vertices on the lower surface are labeled a, b, c, and d (which is not visible in this view).

Fig. 5B shows schematically the projection 155 of rectangular solid 150 in image plane 130, with the vertices labeled with the subscript "i" denoting the projection onto the image plane. Thus the projections of space points A, B, C, D, a, b, c, and d are image points denoted $A_i$, $B_i$, $C_i$, $D_i$, $a_i$, $b_i$, $c_i$, $d_i$, with $c_i$ being hidden in the projected view.

In order to calculate the position and orientation of the rectangular solid the orientation of each of the edges will first be calculated. The edges are orthogonal to each other by definition, so the method of the above section 3.3 captioned "Projections of Three Orthogonal Space Lines" can be applied using the image projections of three selected edges, for example projected edges $A_i$-$D_i$, $A_i$-$B_i$, and $A_i$-$a_i$. This provides the orientations of space lines A-D, A-B, and A-a. It is also known that vertex A must lie along a ray that goes through the viewpoint, O, and has the direction of the N-vector of $A_i$. This constraint also holds for vertices B, C, and D.

The image of the solid does not provide enough information to tell how far away from the viewpoint the solid is. This is shown schematically in Fig. 5C, which shows the original rectangular solid 150 shown in Fig. 5A, and a larger rectangular solid 160, shown in dashed lines, at a greater distance from the viewpoint. This is just an inherent property of projective geometry, and merely reflects the everyday fact that depth perception requires two eyes.

Thus an arbitrary space point along the ray O-$A_i$ is picked and defined to be the location of A. The intersection of two space lines is now formed. One of the lines passes through the viewpoint O and image point $D_i$. The other line passes through A and has the space orientation calculated for the edge A-D. The intersection of these two space lines is the space location of D. The same procedure is then carried out to obtain the space points B and a.

This provides the locations of the space points A, B, D, and a, which completely define the orientation, location, and dimensions of the rectangular solid. Note that the same procedure can be applied to any set or three edges on the solid that are mutually orthogonal.

One problem remains. It is possible to get two sets of orientations from the procedure of the above section 3.3. Thus the procedure above can produce two different solids. In the case where two or more of the defined edges join at a single vertex the procedure for picking the right orientation is to construct both solids and then pick the one that does not hide any of the vertices A, B, D, or a from the viewpoint. In the case where the three edges do not join at any vertex then there is not enough information and the user must choose the proper orientation.

3.6 The 3D Position and Orientation of a Cylindrical Solid

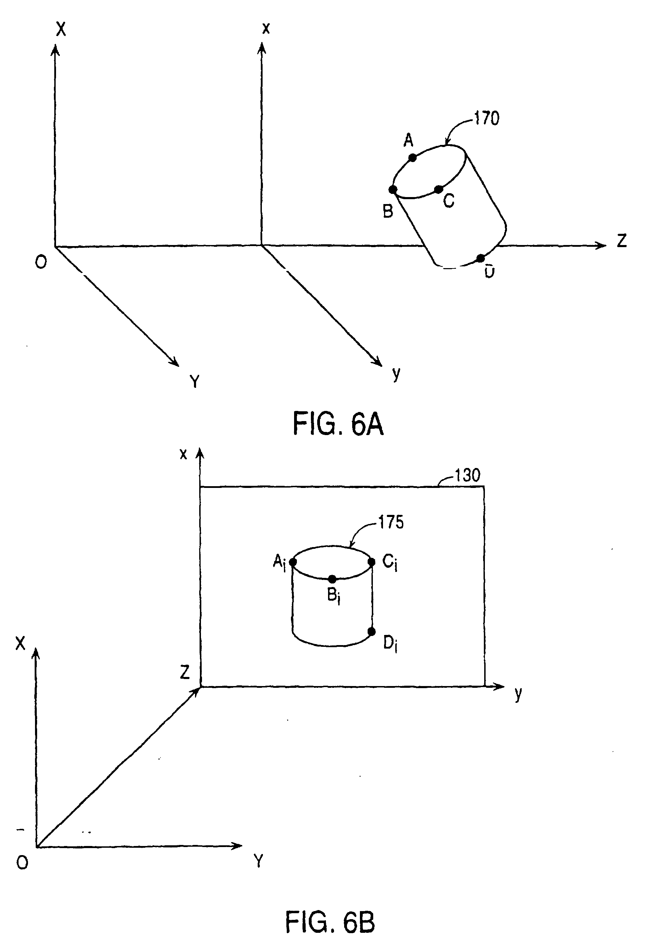

Figs. 6A and 6B are representations (similar to those of Figs. 5A and 5B) showing how the program determines the position and orientation of a cylindrical solid 170 based on its projection 175 in image plane 130. All the parameters for the shape, orientation, and position of a solid of revolution (except for distance from the eye) can be obtained from an image projection of the object. Four points on the solid are labeled A, B, C, and D and the projections of these points in the image plane are denoted $A_i$, $B_i$, $C_i$, and $D_i$. It is assumed that points $A_i$ and $C_i$ lie at the points of maximum curvature of the ellipse and that $B_i$ lies at one of the points of minimum curvature. The parameters for Eq. (2) can then be easily determined thus giving the equation of the ellipse conic in terms of the matrix Q.

The eigenvalues and eigenvectors of Q are obtained using a standard procedure for solving eigensystems (which in this case is straightforward since Q is of small dimension and symmetric). The resulting eigenvalues and eigenvectors are substituted into Eq. (5) to obtain the orientation, n, of the plane supporting the circle that forms the top of the object. An N-Vector, m, for the center of the top is calculated using Eq. (7) and n from above.

The actual space point of the center of the top lies somewhere along m but there is no direct information in the image as to its exact distance. Regardless of the value chosen for the distance from the eye to the center of the top, the orientation of the object will remain the same. The shape of the object will also stay the same except for scale. To get an exact 3D location and size, the distance, d, is either input by the user or a default value is used. Now the center of the top can be fixed by traveling along m for distance d from the viewpoint O. The radius of the top is calculated from Eq. (6) which completes the 3D definition of the top of the object.

Now the height and radii of the rest of the cylinder must be determined. First, a plane, referred to as the xyplane, is constructed so as to contain the axis of the cylinder and be perpendicular to a plane that includes the cylinder axis and the viewpoint O. Next, a ray is projected from the viewpoint through point $D_i$. The point where this ray intersects the xyplane in space is the point D on the cylinder. The point on the cylinder axis that is nearest D is the center of the base of the cylinder and the distance between D and the center of the base is the radius of the base. For the straight sided cylinder of Figs. 6A and 6B, this completely determines the object in 3D space.

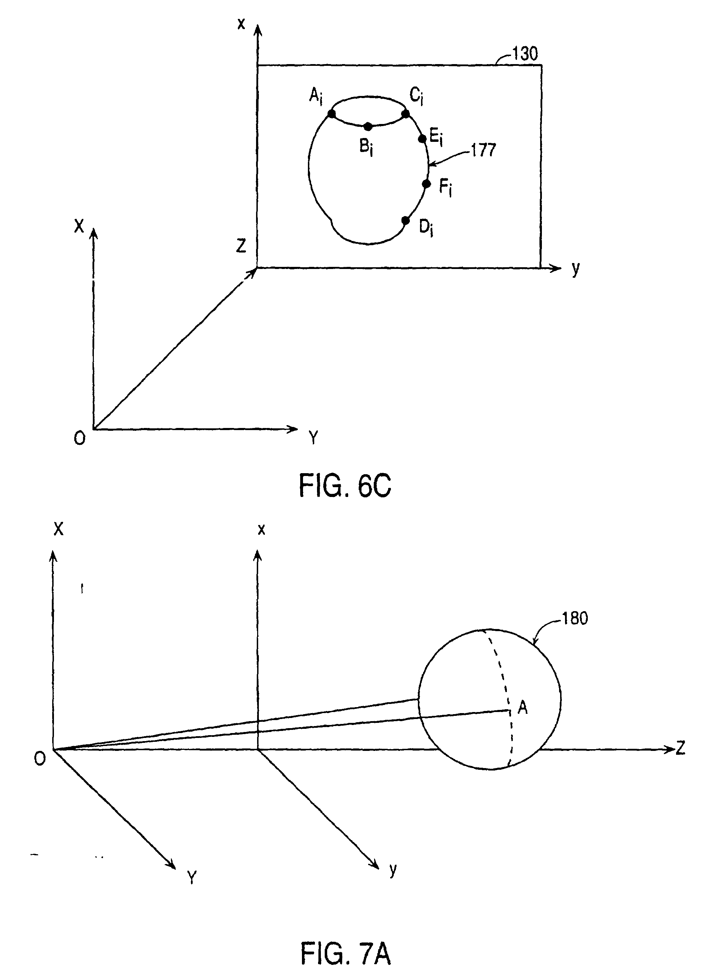

Fig. 6C shows a projected object 177 having a more complicated silhouette. To determine this object in space, the points $C_i$, $E_i$, $F_i$, and $D_i$ are all projected onto the xyplane that was calculated above. A smooth curve lying on the xyplane is fit to these points. This curve forms the outline of the object and defines the radius at all points along the object's axis.

3.7 The 3D Position and Orientation of a Spherical Solid

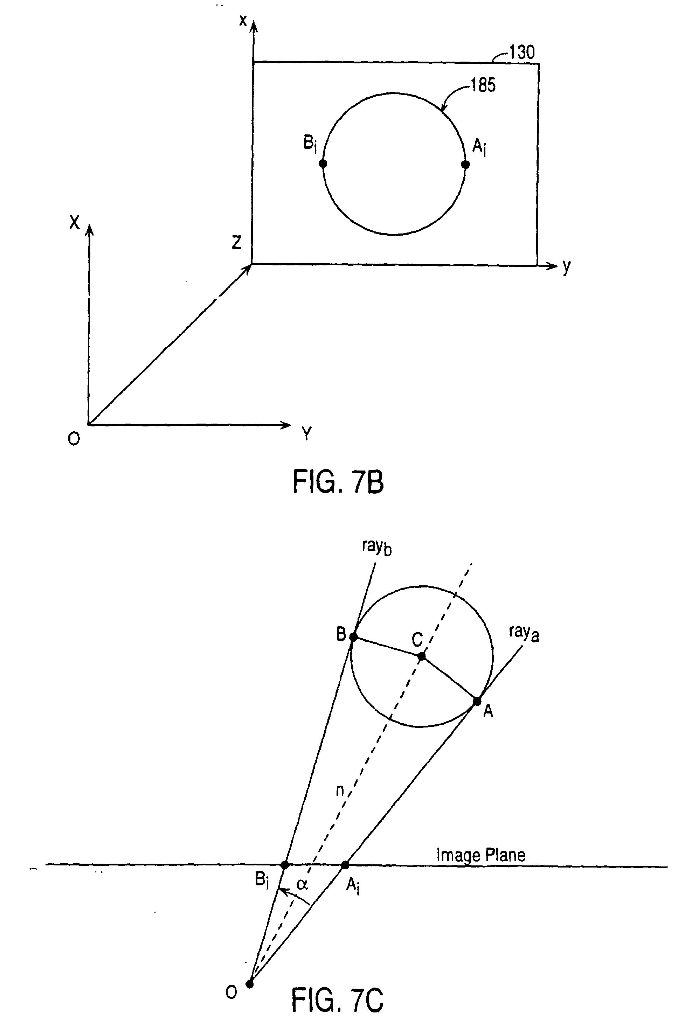

Figs. 7A - 7C show how the program determines the position and orientation of a sphere 180 based on its projection 185 in image plane 130. A sphere is completely defined in 3D by its center point and radius, and the 3D location and orientation (except for scale) of the sphere can be determined from its projection in the image plane. Fig. 7A shows the sphere in space, Fig. 7B shows the sphere projected onto the image plane, and Fig. 7C shows a view of space looking down the x axis. The user settable control points $A_i$ and $B_i$ are projections of space points A and B (space point B in Fig 7A is hidden by the sphere, but both space points can be seen in Fig. 7C). A and B are the points of tangency between the sphere and the rays $ray_a$ and $ray_b$ which go through the viewpoint. The center of the sphere, space point C, must lie on a ray which is in the plane containing $ray_a$ and $ray_b$. Also the angle between the centerline and the rays must be $\alpha / 2$. Angle $\alpha$ is determined by the equation:

$$\alpha = \arccos(V_0 \bullet V_1)$$

where $V_0$ and $V_1$ are the direction vectors of rays $ray_a$ and $ray_b$.
The distance from the viewpoint, O, to the center C of the sphere cannot be determined from the sphere's image so it is given a default value n. Given n, $\alpha$, and the plane equation of the plane containing $ray_a$ and $ray_b$, the center of the sphere can be easily determined. The radius, r, of the sphere can now be determined using basic trigonometry as:

$$r = \sin(\alpha/2) * n$$

The center point, C, and the radius, r, having been determined the sphere is now completely defined except for its distance from the viewpoint.

3.8 Mapping Images to 3D Models

One technique for producing realistic looking pictures from 3D models is to use a technique called texture mapping. The first step in texture mapping is to associate portions of image with surfaces on the 3D model. The second step is to render the model using these portions of the image.
FreeD lends itself to texture mapping since the 3D model was created directly from an image. Thus the correspondence between portions of the image and the 3D model are already known.

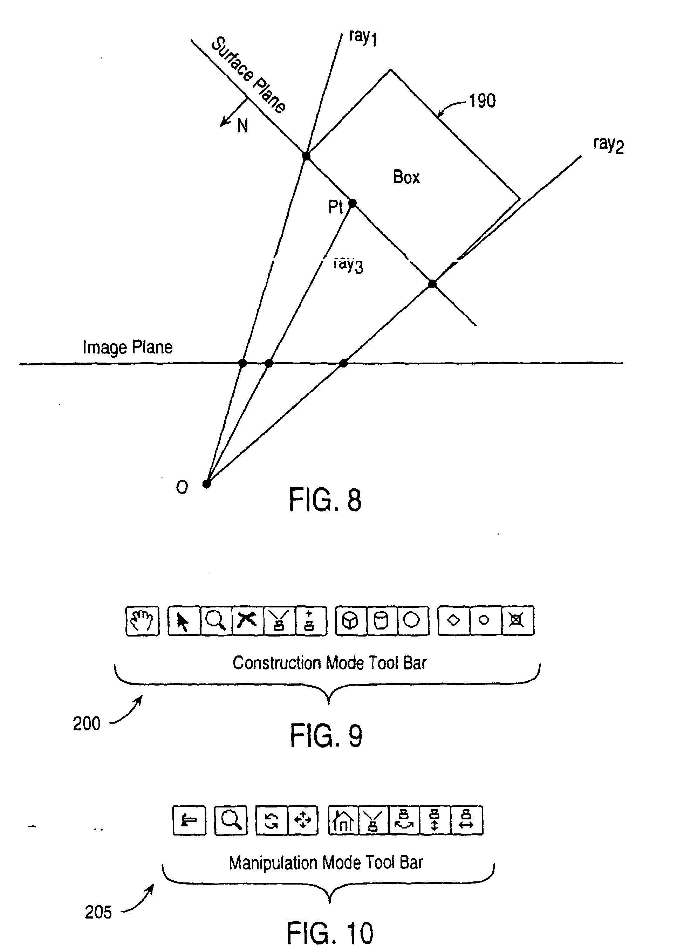

Fig. 8 shows an overhead view of a 3D model of a box 190 being modeled in FreeD. For clarity the figure only shows a slice through the box. As usual the focal distance of the camera is f and the viewpoint is at location O. $Ray_1$, $ray_2$, and $ray_3$ show examples of simulated light rays going from the 3D model through the image plane to the viewpoint. These rays are called eye rays in FreeD.

3.9 Mapping from the Image Plane to a 3D Model Surface

FreeD represents models internally as a set of precise mathematical equations. When a model is rendered to the screen it is converted from its mathematical form into a collection of oriented planar polygons (also known as facets). Each polygon lies on a plane that can be characterized by a 3D normal vector N, and a distance d from the viewpoint. All points Pt on the polygon satisfy the implicit 3D plane equation:

$$Pt \bullet N + d = 0. \tag{8}$$

In FreeD the normal parameter, N, of the plane equation for each surface points outward from the interior of the object containing the surface. For a surface to be visible from the viewpoint, O, the following equation must hold:

$$N \bullet eyeray > 0. \tag{9}$$

where N is the normal to the surface polygon and eyeray is a ray from a point on the polygon to the viewpoint. In the particular view of Fig. 8, only one of the "vertical" surfaces is visible, given the position and orientation of the box. This is in contrast to the situation in Fig. 5B, where two of the "vertical" surfaces were visible.

For every 3D location on a surface polygon that is visible there is a corresponding location in the image plane where the eye ray crosses on its way to the viewpoint. The equation for this point is Eq. (3). Going in the other direction, for points in the image plane there is a corresponding point in space that lies on the surface polygon's plane as follows:

$$nvec = N[(x, y, f)]$$

$$Pt = - (d * nvec) / (N \bullet nvec) \tag{10}$$

where Pt is a point on the polygon surface plane, x and y are the coordinates of a point in the image plane, N and d are the parameters defining the polygon surface plane, and f is the focal distance of the camera system.

Note that there is a further restriction to Eq. (10) that only points that lie within the confines of the polygon surface are allowed.

The way that the exterior surface of a 3D model is subdivided into polygons (facets) depends on the shape of the object. Each face of a rectangular solid is treated as a single rectangular facet, although it would be possible to subdivide each surface of the rectangular solid into a plurality of smaller rectangular facets. For other shapes, the number of facets may be selected by user preference, depending on ultimate curve fidelity desired, as will be described below.

A cylindrical solid has the cylindrical surface divided into a specified number of rectangular facets, each extending the entire axial dimension of the cylinder. The flat top and bottom of the cylinder are each divided into a corresponding number of triangular facets. A truncated cone is divided in the same manner as the cylinder, except that the curved surface is divided into facets that are trapezoidal rather than rectangular, with each facet extending the entire axial dimension of the truncated cone.

A sphere is subdivided in equal increments of latitude and longitude. This results in a set of triangular facets at each of the two poles, and a set of remaining facets that are trapezoidal.

More complicated solids of revolution are defined by upper and lower flat circular surfaces and a revolved surface that has a profile that is other than a single straight line. The profile may be a plurality of straight line segments or may contain at least one curved segment. Any straight segment in the profile defines a portion of the solid of revolution that is cylindrical or a truncated cone, and its facets are rectangular or trapezoidal as discussed above. Any curved segment will be bounded at each of its ends by the end of a straight segment of the profile or by the top or bottom of the object. Any curved segment is divided up into a plurality of linear segments. Thus, each linear segment of the curve, when revolved, produces a truncated cone (or possibly a cylinder) which is itself divided into a circumferentially extending plurality of trapezoidal (or possibly rectangular) facets.

The particular information that is stored for the 3D model includes the vertices and normals for the polygons, as well as parameters characterizing the curved profile segments. A curved segment is stored as a single-segment or multi-segment Bezier curve. As noted above, the normal vector to the polygon surface is needed to determine which polygons are visible when the object is in a particular orientation or at a particular position. It would be possible to store the normal to the curved surface also if desired.

4. <u>FreeD Tools</u>

4.1 <u>Tools and Modes Overview</u>

The specific implementation of the invention, a program referred to as FreeD, offers two sorts of functionality, namely the construction of 3D models from 2D images and the manipulation of the 3D models. Operations are effected by the user invoking tools. Some of the tools are invoked by clicking in a tool bar while some are invoked by making a selection from a list of menu options. These are but two of many known user interface techniques for allowing a user to specify operations.

A tool bar is a row of icons or screen buttons, each denoting an operation to be carried out when the button is clicked by the user to select an operation. The button and its associated operation are often referred to as a tool, but in the specific embodiment, the menu options are also implemented as tools. Some of the tools can be invoked by either clicking in one of the tool bars or by making a menu selection.

FreeD provides separate tool bars for the construction and manipulation modes. The first tool in each of the tool bars is the tool for going to the other mode. The current mode is preferably indicated in the center of the top line of the screen. Both modes allow the user to adjust FreeD's virtual camera settings to more closely agree with the camera settings that were used to create the image.

In addition to these two main modes, FreeD is characterized by a number of sub-modes. Most of the FreeD tools are modal tools, which when clicked, invoke a sub-mode wherein cursor events are directed to a handler for the tool. A modal tool remains in effect until another tool is selected. In the lists of tools set forth in the sections below, a tool is assumed modal unless otherwise indicated. A non-modal tool, when clicked, effects a command and performs no further actions until re-selected.

4.2 Construction Mode Operations

Fig. 9 is a representation of the construction mode tool bar, denoted by the reference numeral 200. The tools, from left to right, are as follows:

Go to Manipulation Mode;
Select Object;
Magnify or Shrink Whole Picture (Zoom);
Delete FreeD Object (non-modal tool);
Field of View Angle;
Center Point;
Construct 3D Box (non-modal tool);
Construct 3D Solid of Revolution (non-modal tool);
Construct Sphere (non-modal tool);
Add Sharp Handle;
Add Smooth Handle; and
Delete Handle.

The Go to Manipulation Mode tool, when clicked, switches the user out of construction mode and into manipulation mode. Manipulation mode works only on objects created in FreeD's construction mode, and therefore the mode is unavailable until the user has outlined one or more FreeD objects in construction mode.

The Select Object tool, when clicked, allows the user to select a 3D object. An object must be selected before the user can perform any operations on it. FreeD automatically selects the last object that was worked on.

The Zoom tool, when clicked, allows the user to position the cursor over the area to be magnified. Each click doubles the image size. The user can shrink the image by a factor of two by clicking while holding down a modifier key (the "option" key in a current Macintosh embodiment and the "Alt" key in a current Windows embodiment). The user can also specify particular magnification values as a setting for camera Properties.

The Delete FreeD Object tool, when clicked, deletes the FreeD object that is selected. Deleting a FreeD object has no effect on the original image.

The Field of View Angle tool and the Center Point tool, when clicked, allow the user to make small field of view or very small center point adjustments to facilitate fitting the cage over the pictured object. The Field of View Angle tool and the Center Point tool have no effect on the original image, but rather apply only to 3D objects outlined in construction mode. Therefore, the Field of View Angle and Center Point tools are unavailable until a FreeD object has been outlined. Their operation will be discussed in greater detail in following sections.

The Construct 3D Box tool, when clicked, creates a square 3D cage with handles as described above in the section above describing basic user interactions. The user creates a texture-mapped 3D box by moving the cage and positioning the handles on corners of a pictured box so as to align the edges of the cage with the edges of the pictured box. As mentioned above, if the user is unable to achieve a satisfactory fit, adjustment of the field of view angle and center point will typically allow a satisfactory fit.

The Construct 3D Solid of Revolution tool, when clicked, creates a cylindrical 3D cage. The details of the operations of modeling a more complicated solid of revolution will be described in a later section. At this point, it is worthwhile to note that the cylindrical cage can be modified by adding additional handles along the edges to create lathe-like effects (to create objects such as vases, wine bottles, and lampshades).

The Construct Sphere tool, when clicked, creates a circular cage with two handles.

The Add Sharp Handle tool, when clicked, allows the user to add a sharp (cusp) handle for creating sharp extrusions in the sides of cylinders. The user can also use this tool to change an existing smooth handle to a sharp handle.

The Add Smooth Handle tool, when clicked, allows the user to add a smooth handle for creating smooth or rounded extrusions in the sides of cylinders. The user can also use this tool to change an existing sharp handle to a smooth handle.

The Delete Handle tool, when clicked, allows the user to delete a sharp or smooth handle created with one of the above tools.

4.2.1 Adjusting Camera Parameters

The 2D photographs that are typically the images that are manipulated with FreeD were taken with specific cameras, located at specific places, set to specific parameters. It is not necessary to know this information to use FreeD, but the camera settings that were in use when the original photograph was taken affect the image, and can sometimes make a difference in the user's ability to fit the cage over a pictured object.

When the user manipulates the handles on the cage, the displayed edges of the cage correspond to a projected 3D model based on an assumed set of camera parameters (FreeD's virtual camera). Any difficulty the user experiences in fitting a rectangular cage to a pictured rectangular object may result from the fact that the photograph was taken with different camera parameters than are assumed internally by FreeD. To the extent that the user is aware of the camera parameters that were used when the picture was taken, these can be entered. Otherwise, the user can make small adjustments to the camera parameters using the Field of View and Center Point tools.

4.2.1.1 Field of View Angle

The Field of view Angle tool, when clicked, causes the cursor to take on the general appearance of the tool, and the user can change the field of view angle by dragging the cursor upwardly or downwardly. The user can specify the default field of view angle in FreeD's general preferences and can specify a particular field of view angle for a particular image in that image's Properties.

By way of background, a human eye has a field of view of approximately 48 degrees, which corresponds approximately to a 58mm lens for a 35mm camera. As is well known, a 28mm wide angle lens on a 35mm camera provides a relatively wide field of view angle of approximately 75 degrees while a 200mm telephoto lens provides a narrow view angle of approximately 12.2 degrees.

4.2.1.2 Center Point

The Center Point tool, when clicked, causes the cursor to take on the general appearance of the tool, and the user can change the point by dragging the cursor in the appropriate direction.

A photograph is flat 2D, but the human eye nevertheless interprets the pictured objects in a 2D image as having 3D properties. For example, one object may appear to be behind another. Photographers usually lay out their pictures with careful deliberation so the center of the picture is where the photographer wants it. The placement of the center, sometimes called the pierce point or aim point, affects one's visual interpretation of the sizes and orientations of peripheral objects. A cropped image might not have the same center point as the original image.

FreeD assumes by default that the center of the image is the center that makes the intended sense. However, if the image was a cropped image, the assumed center point is not the center point with the original image. Given that the underlying computations assume a center point (position where the optical axis of the lens intersects the image plane), the user may have difficulty fitting the cage to a pictured object, if the center point is not where it is assumed to be.

4.3 Manipulation Mode Operations

Fig. 10 is a representation of the manipulation mode tool bar, denoted by the reference numeral 205. There is no specific selection in manipulation mode because selecting an object in manipulation mode is accomplished by placing one of the specialized cursors over the object. Whatever was last selected in construction mode does not usually matter in manipulation mode. The tools, from left to right, are as follows:

Go to Construction Mode;
Magnify or Shrink Whole Picture (Zoom)*;
Rotate Object;
Move Object;
Reset to Default Values (non-modal tool);
Field of View Angle*;
Orbit the Scene;
Move (Dolly) Camera; and
Slide Camera.

The Go to Construction Mode tool, when clicked, switches the user out of manipulation mode and into construction mode. The tools marked with an asterisk (*) have basically the same operation in manipulation mode as in construction mode, and therefore will not be described further.

The Rotate Object tool, when clicked, allows the user to position the cursor over a FreeD object, and rotate the object in three dimensions by moving the cursor in a small circular pattern. The object may be rotated in any direction, including end over end.

The Move Object tool, when clicked, allows the user to position the cursor over a FreeD object, and move the object in a single plane by dragging the cursor. To move the object in and out, use is made of the Move (Dolly) Camera tool, to be described below. The Move Object tool moves only one selected object. If there are several FreeD objects to be moved simultaneously, the Orbit the Scene or Slide Camera tool, should be used.

The Reset to Default Values tool, when clicked, (a) restores the image to the way it was when manipulation mode was entered, (b) resets the camera settings for the manipulation mode camera to match the current construction mode camera settings, and (c) undoes all the effects of moving the manipulation mode camera and of moving and rotating FreeD objects.

The Orbit The Scene tool, the Move (Dolly) Camera tool, and the Slide Camera tool, when clicked, allow the user to change the effective camera position with respect to the FreeD objects in the scene. These FreeD camera movement tools operate on all FreeD objects that have been constructed in the scene, in contrast to the move and rotate tools, which operate only on one selected FreeD object.

### 4.3.1 Camera Movement

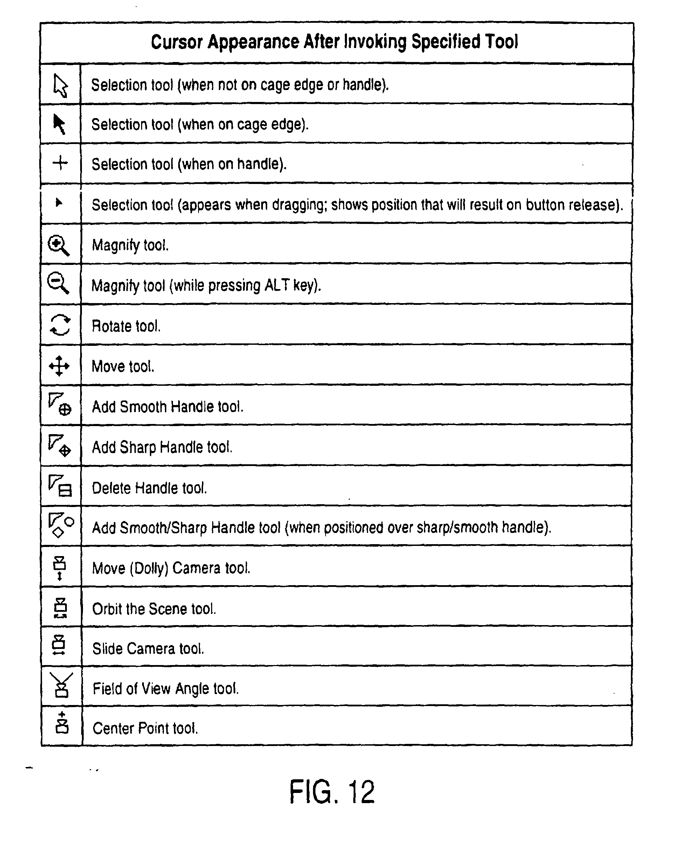

Fig. 11 shows the camera movements invoked by the Orbit the Scene, Move (Dolly) Camera, and Slide Camera tools. FreeD's virtual camera is denoted by the reference numeral 210.

The Orbit the Scene tool allows the user to simulate physically moving the camera around, i.e., orbiting, all the FreeD objects pictured. The tool works only on FreeD objects since these are the only object FreeD has information about. It is possible to orbit up, down, or sideways. Distance between the camera and the FreeD objects does not change. The visual effect of using the Orbit the Scene tool is like that of using the Rotate Object tool, but applied simultaneously to all FreeD objects in the scene.

The Move (Dolly) Camera tool, when clicked, allows the user to move the camera like a dolly shot (i.e., closer or farther from the FreeD object). It moves the camera only with respect to the FreeD objects; the rest of the photograph is not affected. To move closer, the user drags up; to move farther away, the user drags down. The visual effect of the Move (Dolly) Camera tool is somewhat like the Magnify tool, except that the Move (Dolly) Camera tool affects only FreeD objects while the Magnify tool affects the whole photograph.

The visual effect of moving the FreeD camera using the Move (Dolly) Camera tool is somewhat like changing the field of view angle by using the Field Of View Angle tool, in the sense that both cases the objects appear larger or smaller. However, the Move (Dolly) Camera tool does not change the shape of the FreeD object whereas changing the field of view angle warps (slightly alters the shape of) the FreeD object, in addition to enlarging to shrinking it. In photographic terms using the Move (Dolly) Camera tool simulates physically moving the camera while using the Field Of View Angle tool simulates changing the focal length of the lens.

The Slide Camera tool, when clicked, allows the user to move the FreeD camera in any direction in the plane perpendicular to the camera direction by dragging in the desired direction.

### 4.4 Cursor Appearance

In many cases, clicking a tool causes the cursor, when subsequently moved over the work area, to change its appearance to resemble that of the graphic on the tool. This helps the user remember what tool was most recently selected. Furthermore, the cursor may change its appearance again when it is positioned over different objects, such as handles or cage edges, in the work area. This provides an additional hint that a certain operation will result when the user clicks the mouse button. Fig. 12 presents a table showing the cursor appearance when different tools are selected.

### 5. FreeD Menus

The menu bar for the Macintosh and Windows versions of FreeD includes File and Edit menus. The functionality is basically the same in both versions. For definiteness, the Macintosh menus will be described. In addition to the File and Edit menus, the Macintosh version has the Apple logo menu, as well as the Macintosh-specific Help and application menus at the extreme right. As is well known, the Apple logo menu contains an entry allowing the user to access the screen "About FreeD" as well as non-application-specific entries (present in all applications). Selecting "About FreeD" gives general information regarding the authorship of FreeD. It produces the same display as FreeD's "splash screen", displayed when Photoshop's "About Plug-ins" menu command is invoked and "FreeD" is selected.

### 5.1 Menu Bar: File Options

Clicking on File brings up a pull-down menu with three options:

OK
Cancel
Export

OK (Render Back to Photoshop) finally renders the image that has been constructed in manipulation mode at full resolution, and writes it back into Photoshop. Note that the object is flattened again (restored to 2D) when back in Photoshop; it is 3D only in FreeD. As the image is returned to Photoshop, the Photoshop status line displays "Filter: FreeD", which darkens progressively as the operation proceeds. Selecting OK in the Edit menu is the sole way to modify the original Photoshop image from FreeD.
Cancel totally cancels this invocation of FreeD. No objects or manipulations are saved, and the Photoshop image is not modified.
Export allows the user to construct a VRML (Virtual Reality Modeling Language) file that represents the objects that have been constructed with FreeD. VRML files can be used with a VRML-enabled World Wide Web browser.

### 5.2 Menu Bar: Edit Options

Clicking on Edit brings up a pull-down menu with five options:

Undo;
Redo;
Camera;
Object; and
Preferences.

### 5.2.1 Undo, Redo

Undo undoes the previous operation(s). By default, it will undo up to 20 operations. A desired number of levels of Undo from 1 to 1000, inclusive, can be set in Preferences. Redo undoes the previous Undo. All Undo settings apply.

### 5.2.2 Camera Properties

The FreeD screens in construction mode and manipulation mode are images conforming to the parameters that characterize FreeD's virtual cameras. The user can modify the settings of these cameras "on the fly". The construction mode and manipulation mode tool bars include tools to control the field of view angle, degree of magnification, and center point separately for each view. In addition, the Edit menu's Camera option lets the user display or black out the entire background (2D) image. The default has the background image visible.

### 5.2.3 Object Properties

Each object (box, sphere, solid of revolution) constructed using FreeD can have two properties: Name and Show Ghost. The user selects the object in construction mode and selects the Object option. This brings up a dialog box that allows the user to change the default Name and Show Ghost properties.
FreeD gives default names to the objects: box0 for the first box, box1 for the second box, sphere0 for the first sphere, cylinder0 for the first solid of revolution, etc. The default names can be changed by changing an object's Name property. The assigned names can be of any desired length and can contain spaces. This feature is particularly useful if several FreeD objects are created in a single picture; for example, distinguish "lefthandbox" and "righthandbox." In order to export an object to VRML, it may be necessary to know its name.
An object's Show Ghost property specifies whether the object's "ghost" will be shown when the object is moved from its original location or orientation. The ghost is the shape of the original 2D object rendered in gray. The default object property and preference is not to show the ghost; that is, to continue to show every original object. To show the ghost instead for a specific FreeD object, the Show Ghost box in the dialog box should be checked. (In the Windows version, Show Ghost can also be set as a View preference for all new FreeD objects constructed.) The effect of this option is visible only in manipulation mode, although the option can be set in either construction or manipulation mode.

5.2.4 <u>Preferences</u>

Preferences are FreeD defaults. They apply to all new objects that are constructed. If preferences are changed after having constructed some FreeD objects, the old objects retain the old preferences. New preferences take effect the next time FreeD is run, so if they are desired right away, they should be reset and FreeD restarted. Clicking Preferences produces a hierarchical pull-down menu with five options:

General;
Object;
View;
Render; and
VRML.

5.2.4.1 <u>General and Object Preferences</u>

Currently there is one General preference, the number of undos. The user can change the default value (20) for the number of Undos and Redos to any number from 1 to 1000, inclusive. There is currently one object preference: Always Show or Hide the Ghost for every FreeD object that is created.

5.2.4.2 <u>View Preferences</u>

Three View preferences can be specified: (1) Default Field of View Angle; (2) Curve Fidelity of All FreeD View Images; and (3) Background Image Always (In)Visible. These govern how FreeD objects appear when the user is working with FreeD. They do not affect how FreeD objects are finally rendered for output back to Photoshop. It is possible, however, to set Render preferences as mentioned above, and discussed further below.
The Default Field of View Angle can be set as a preference for both construction mode and manipulation mode view cameras. The field of view angle was described in detail above in connection with the description of the Field of View Angle tools.
The Curve Fidelity of All FreeD View Images refers to the number of discrete line segments that FreeD uses to draw curved lines on spheres or smooth cylinder edges in the FreeD display. The more line segments, the smoother-looking the curve. The user can choose High (smoothest), Medium (somewhat smooth), or Low (least smooth). The higher the curve fidelity, the slower the program. The shipped default is Low, as befits the notion of speeding up operation.
In the specific implementation, a cylindrical surface is subdivided into 16, 24, or 32 rectangular or trapezoidal polygons, depending on whether the user has selected low, medium, or high for Curve Fidelity Of All Freed View Images as a view preference. Similarly, these numbers of segments correspond to the numbers of segments in longitude into which a sphere is divided. Since the angular extent of a sphere's latitude is only one-half of a circle, the sphere is divided into 8, 12, or 16 horizontal slices at equal increments of latitude, depending on the user's choice of Curve Fidelity Of All Freed View Images. For more complex solids of revolution where at least the portion of the surface is characterized by a profile that is stored as a single-segment or multi-segment Bezier curve, the curve is broken up into 8, 16, or 32 segments, depending on the user's choice of Curve Fidelity Of All Freed View Images.
The Background Image Always (In)Visible preference can be set to specify whether the background image is to be visible or not. The default is to show the background (the box is checked). Removing the check in the box sets the Background not to be visible. It is possible to make the background image visible only for a specific FreeD object by setting Background Image (In)Visible for this image under Camera in the File menu.

5.2.4.3 <u>Render Preferences</u>

The Render preferences determine how a FreeD object is finally rendered for placement back into the original image in Photoshop. The user can specify two Render preferences: (1) Anti-aliasing of All Rendered Images; and (2) Curve Fidelity of All Rendered Images.
Anti-aliasing of All Rendered Images can be specified at three levels of anti-aliasing: none, medium, or high. If anti-aliasing is set to "none", edges, especially on diagonal and curved lines, appear more jagged, like stair-steps. Anti-aliasing blurs the pixels along the edges, making the edges appear smoother. The effects of anti-aliasing can be seen very clearly in Photoshop by magnifying and viewing a diagonal line with and without anti-aliasing. The more anti-aliasing, the longer it takes to finally render the image.
Curve Fidelity of All Rendered Images specifies the number of discrete line segments that FreeD uses to draw curved lines on spheres or smooth cylinder edges in the FreeD image when it is finally rendered. The more line segments, the smoother-looking the curve. The user can choose High (smoothest), Medium (somewhat smooth), or Low (least smooth). The shipped default is Low. The higher the curve fidelity, the longer it takes to render the image back to Photoshop. In the specific implementation, the number of segments for a given selected Curve Fidelity Of All Rendered Images in the render preferences is twice the number of segments for the corresponding selected Curve Fidelity Of All Freed View Images in the view preferences.

### 5.2.4.4 VRML Preferences

The VRML preference govern FreeD's File command Export. VRML is a file format for representing 3D objects (such as FreeD objects) for use on the World Wide Web. Exporting a FreeD object instructs FreeD to construct a VRML-type file. The VRML format describes the object to be exported. Part of the VRML description is a specification of the object's shape (e.g., a box); another part of the VRML description is a specification of the location of the picture to put on the shape (the object's texture map, e.g., "shiny blue"). FreeD provides the VRML description of the object's shape. The user must specify where the texture map is located. URL (Uniform Resource Locator) is the standard way to identify the location of WWW files, so VRML needs the specification of the texture map in URL format.

### 6. Rendering the 3D Model

### 6.1 Manipulation Mode Rendering

There are two cases where FreeD's internal 3D model is rendered to the screen: (1) in manipulation mode when the user changes the position or orientation of a 3D object or the position, orientation or field of view angle of the camera; and (2) when the user selects the "OK" menu command from the File menu.

As mentioned above, while FreeD is operating, it displays a low-resolution grayscale version of the original image, as modified by operations in the manipulation mode. The 3D model is rendered in this low resolution with a curve fidelity specified as one of the View Preferences. When the user selects "OK," the original image is changed in accordance with the changes effected on the construction-mode image during FreeD's operation in manipulation mode. That is, the model is rendered at the resolution and bit depth (number of colors) of the original image, with anti-aliasing and curve fidelity as specified in the Render Preferences, and relevant portions of the original image are then overwritten.

When a user action in manipulation mode causes FreeD to render the scene, first a check is made to see if this is the first rendering or if the user has changed the Curve Fidelity of All FreeD View Images in the View Preferences. If so, a new polygonal model is created from the internal mathematical model. Next all the polygons that pass the test of Eq. (9) are rendered.

Fig. 8, discussed above in sections 3.8 and 3.9 dealing with mappings between the image plane and visible 3D model surfaces, provides a useful reference for the discussion that follows. The figure represents the geometrical relationships that apply in both construction and manipulation modes. In construction mode the low resolution input image was used to obtain a position, orientation, and proportions for the object (a box). The position and orientation of the object define a mapping between points in the image plane and points on visible surfaces of the box in 3D space.

When the object is moved, rotated, or has the camera parameters changed in manipulation mode, the corresponding points on the polygon surfaces (to the extent that the surfaces remain visible) map to different points in the image plane. In order to determine the new image to be displayed in manipulation mode, the color of each pixel in the image plane must be determined. This is done as follows.

For each pixel in the image plane, a ray is drawn through the viewpoint, O, and the pixel. If this ray intersects one of the visible polygon surfaces of the box, then the color of the pixel in the image plane will be set to the color of the object at that point on the visible polygon surface. Put another way, a texture map associated with the polygon defines the color of the pixel in the image plane. This requires the color at different positions on the polygon surface to have been determined or to be determinable on the fly.

One possible way to do this is to create a texture map for each of the polygon surfaces based on the portions of the construction-mode image that mapped to the polygon surfaces. This would, in effect, undistort the portions of the image to represent each polygon surface as if the polygon surface were being viewed at 90 degrees (i.e., face on). These texture maps could then be applied to the polygon surfaces of the 3D model. When the polygon surfaces of the object assumed new orientations in manipulation mode, they would be rendered using standard techniques. This approach can be seen as first undistorting the raw textures from the construction-mode image to account for the original projection parameters, and then distorting the undistorted textures in a way that accommodates the new projection parameters (i.e., the new orientations and positions of the polygon surfaces after operations in manipulation mode).

However, in the preferred specific implementation, the colors on the surfaces are not stored as separate texture maps. Rather, the manipulation mode pixel values are determined from the construction-mode image and the 3D geometry information obtained as a result of operations in construction mode. Specifically, when the ray through the pixel to be colored in manipulation mode intersects the polygon surface at a specific point on the object, the same point on the object, but with the object in its original position (as determined during construction mode), is projected back to the viewpoint. The ray from the point on the object in its original determined position back to the viewpoint intersects the image plane at a location whose color is the desired color for the pixel to be colored.

The construction-mode image is a grayscale downsampled version of the original input image from Photoshop. Usually the intersection of the ray from the polygon to the viewpoint does not intersect the image plane exactly through the middle of a pixel. To maintain interactive redraw speeds in manipulation mode, the nearest pixel to the intersection is used (rather than an interpolation of all the neighboring pixels).

This technique is unlike industry standard texture mapped polygon rendering schemes in that it takes into account the perspective foreshortening that is inherent in the way that.the construction-mode image was formed. Failing to take this into account would cause visible distortion of surfaces that span a large depth ranges in the construction-mode image.

### 6.2 Final Rendering

There are several differences the method used to render the final image that will be given back to Photoshop when the user selects the "OK" menu item.

First, there is a final rendering fidelity parameter that is used to determine the number of polygons that will be used to render the final scene. This parameter is used along with the internal mathematical model of the object to create a collection of polygons that form a finite representation of the object. Since fidelity is usually more important during the final rendering stage significantly more polygons are often generated in the final rendering process.

Second, the value of the color used for each result pixel is a linear interpolation of the nearest four pixels in the texture image. This gives a more accurate representation of the color than the nearest neighbor technique used in manipulation mode.

Third, the original resolution color image from Photoshop is used to obtain texture data for the final image and the resultant image is rendered at the same resolution as the original image.

These factors usually combine to make the final rendering a much longer process than manipulation mode rendering. During the final rendering process Photoshop displays a progress indication for the user, based on data supplied by FreeD while it is performing the final rendering.

### 7. Additional Techniques

### 7.1. Creating a Cylinder

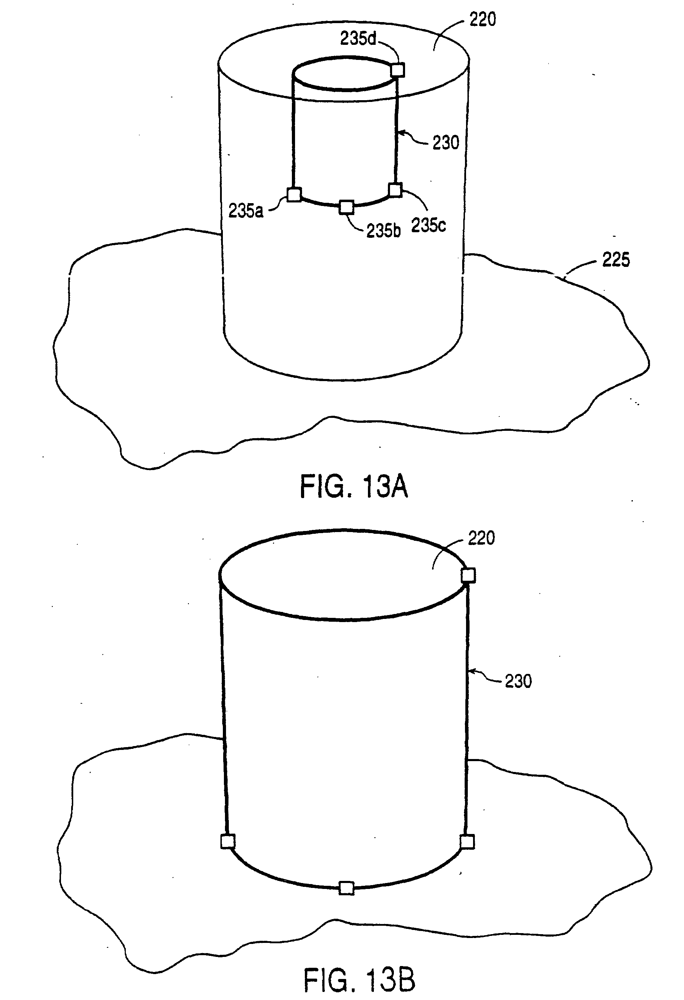

Fig. 13A represents a 2D image of a 3D cylinder 220 in a 3D scene suggested by an arbitrary scene fragment 225. The figure represents the screen after the user has clicked on the Construct 3D Solid of Revolution tool so as to bring on screen a cylindrical 3D cage 230. The cage has four handles, three lower handles 235a-c representing points at 90° intervals along the circumference of one of the circular surfaces and the fourth handle 235d representing a point on the opposite circular face. While the default cage has three lower handles and one upper handle, the user can, in effect, invert the cage by dragging the upper handle so that is below the other three handles (in the relative positions or image points $A_i$, $B_i$, $C_i$, and $D_i$ in Fig. 6A). This could facilitate fitting the cage where the lower portion of the cylinder was partially hidden.

Fig. 13B represents the screen after the user has positioned the handles on corresponding locations in the image so that the lines of the cylindrical cage provide a visually acceptable fit to the corresponding visible edges of the pictured cylinder. The vertical lines in the image of the cylinder are not edges in the sense of edges in the case of a cube, but do present identifiable features to which the cage can be aligned. At this point, the user could switch to the manipulation mode (by clicking the Go to Manipulation Mode tool in the construction mode tool bar), whereupon the 3D model of the cylinder could be rotated, moved, or subjected to other manipulation mode operations as described above.

From the point of view of 3D's virtual camera, there is no distinction as to whether the pictured object is a cylinder or a truncated cone. That is, the four handles on the cage are sufficient to define a 3D solid of revolution that is generated by sweeping a straight line having a component parallel to the axis of revolution about the axis of revolution. If the straight line that is swept is parallel to the axis of revolution, the resulting solid of revolution is a cylinder. If the line that is swept is not parallel, the result is a truncated cone. While the truncated cone is widely present in such articles as round wastebaskets and some lampshades, many pictured objects of interest are more complex solids of revolution, being characterized by a swept line that is not a straight line.

7.2. Creating a Complex Solid of Revolution

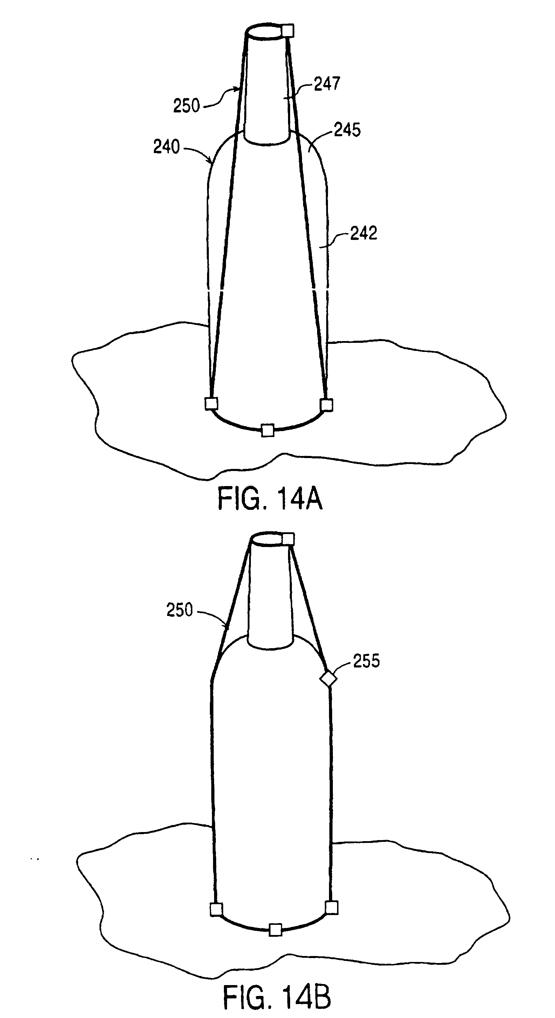

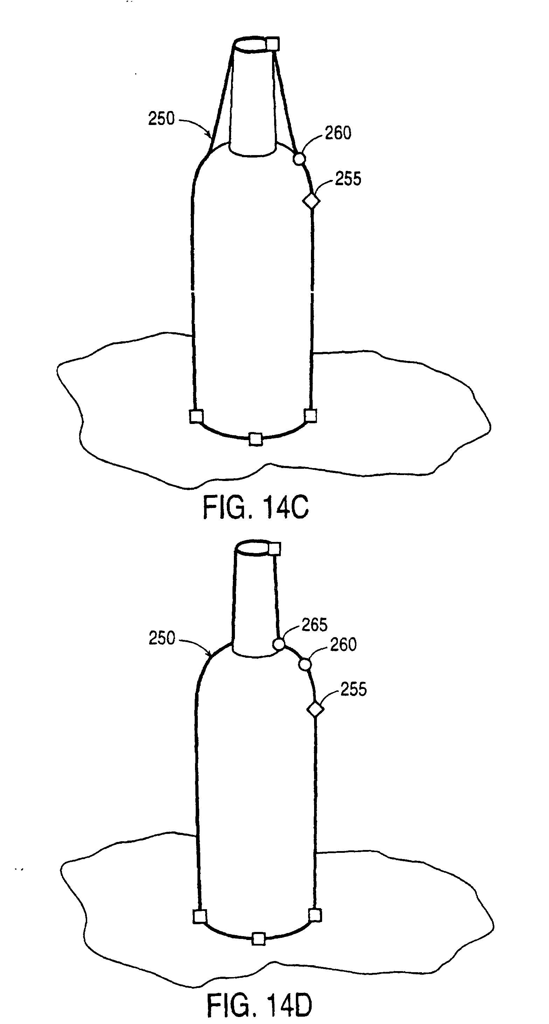

Fig. 14A represents an image of a more complex solid of revolution, namely a bottle 240. The bottle is characterized by a cylindrical lower portion 242, a convex intermediate portion 245, and a cylindrical (or possibly slightly tapered) neck portion 247.

The figure represents the screen after the user has positioned the three lower handles of the cylindrical cage, denoted 250, along the lower edge of the cylindrical portion and the fourth handle at the top of the wine bottle. Clearly, the cage at this point represents a truncated cone and does not provide a visually acceptable fit to the pictured object. However, as mentioned above in connection with the description of the construction mode tools, there are tools for adding sharp and smooth handles.

Fig. 14B represents the screen after the user has added a sharp handle 255 (using the Add Sharp Handle tool) to a position on the wine bottle where the cylindrical portion joins the convex portion. This, in effect, causes the cage to represent a compound object having a cylindrical portion and a truncated cone portion.

Fig. 14C represents the screen after the user has added a smooth handle 260 part way around the convex portion, while Fig. 14D represents the screen after the user has added another smooth handle 265 where the convex portion Joins the neck ot the bottle. At this point, the cage fits the pictured object in a visually acceptable way, and the user can then switch to manipulation mode and perform whatever operations are desired.

7.3 Placing a 3D Model into a 2D Image of a 3D Scene

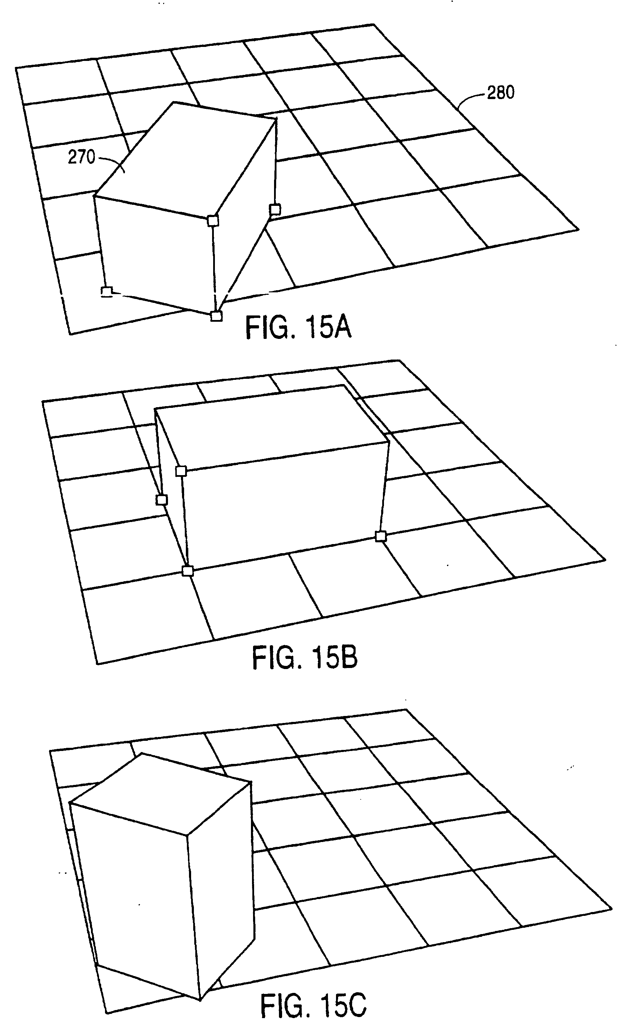

Figs. 15A - 15C show that aspect of the invention that allows the user to place a 3D object 270 into a 2D representation of 3D scene 280. The object may be a modeled object created as described in preceding sections, or may be a 3D model produced by a conventional 3D modeling program. In any event, the 3D model is characterized by control elements (points or edges) such as the handles used to manipulate the wireframe cage. The user may place a modeled object in a scene by opening an image of the scene, and entering a mode for placing objects. The user then retrieves the object to be placed.

Fig. 15A shows the 3D model (created as described in the preceding section) superimposed on a scene at an arbitrary default location. The scene is shown as being a representation of a horizontal rectangular grid. In the mode for placing objects, the object normally retains its 3D shape and the positions of the control points are manipulated to specify the position and orientation of the object. Once two handles are placed, establishing a "length" for one of the edges, the lengths of the other two edges are constrained to maintain the original proportions.

In the event that the user wishes a placement that is inconsistent with the original proportions of the object, provision could be made to allow the proportions of the object to be changed. This can be provided as an option to the user, who can then override the normal maintenance of proportions. Since the invention maintains, with proper perspective correction, the pictured surface textures on the object, changing the proportions of the object can raise an issue with the texture mapping. A change in proportions of the object requires a deformation (stretching or compressing) of at least one of the visible surfaces. There may be some pictures where the texture can be deformed or replicated to accommodate the changed proportions without disrupting the appearance of the picture.

Fig. 15B shows the object as having been placed in the scene by positioning control handles at corresponding desired locations in the scene (in this case, with the box's edges aligned with the grid). Depending on the implementation, the system can be configured so that once the 3D object has been created, any of its corners can be manipulated as handles. Fig. 15C shows a different positioning based on having placed different control points on different specified positions in the scene.

8. Internal Program Operation

8.1 Initial Program Operation

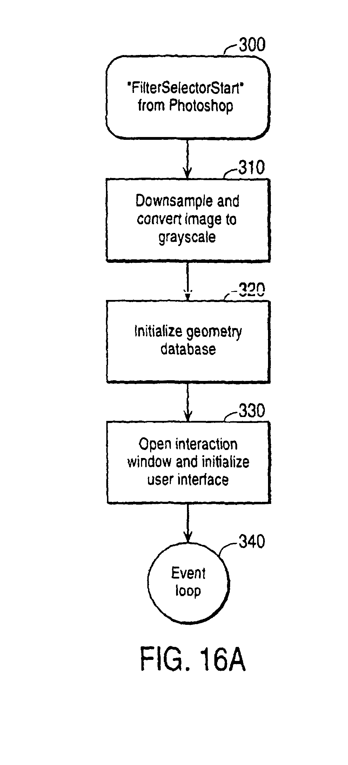

Fig. 16A is a flowchart showing the initialization activities of the current embodiment of the FreeD program. Since this implementation of FreeD is a plug-in for the Photoshop image editing program, it is assumed that FreeD has been installed in the computer and Photoshop is running. The user brings up an image in Photoshop. Then the user selects FreeD from a set of plug-in tools. Photoshop turns over control to FreeD by issuing the "FilterSelectStart" call in the Photoshop Application Programming Interface (API) (step 300). In other embodiments, where FreeD is a self-contained program, the image may be gotten directly by using operating system calls and standard user interface elements.

FreeD then downsamples the image (i.e., makes the image smaller), and if the original image is color, FreeD converts it from color to grayscale (step 310). This allows the program to run in less computer memory and makes the display of its output faster. Furthermore, the colored cage is easier to see and adjust against a grayscale background.

In a specific implementation, the downsampled grayscale image has 8-bit pixels and an overall size that is no larger than 384 kilobytes. If the original image needs to be reduced, it is divided into tiles (2x2, 4x4, 8x8, etc., as needed). and the pixel values within each tile are averaged to provide the downsampled image. Each pixel's 24-bit set of RGB values is converted to an 8-bit luminance value. The luminance value is a weighted average of the R, G, and B values, being given by:

$$0.59\,G + 0.3\,R + 0.111\,B$$

subject to a normalization factor such that RGB values of (255, 255, 255) map to a luminance value of 255. The maximum image size is such that a 640x480 original image does not have to be downsampled.

After downsampling and converting the original image to grayscale, FreeD initializes its internal geometry database (step 320). FreeD is a state machine; that is, as it proceeds, its commands' effects depend on whether and what bits are present in various internal registers and tables. "Initializing the geometry database" means FreeD sets all the initial values to a consistent initial state, to ensure that each invocation of FreeD begins clean. This step is standard operating procedure in computer programming. FreeD then makes calls to the operating system to display FreeD's main window and user interface elements (menus, tool bar, and status area), and to activate the program's controls (step 330). FreeD is now ready to receive user input and enters its main event loop at 340.

8.2 <u>Main Event Loop</u>

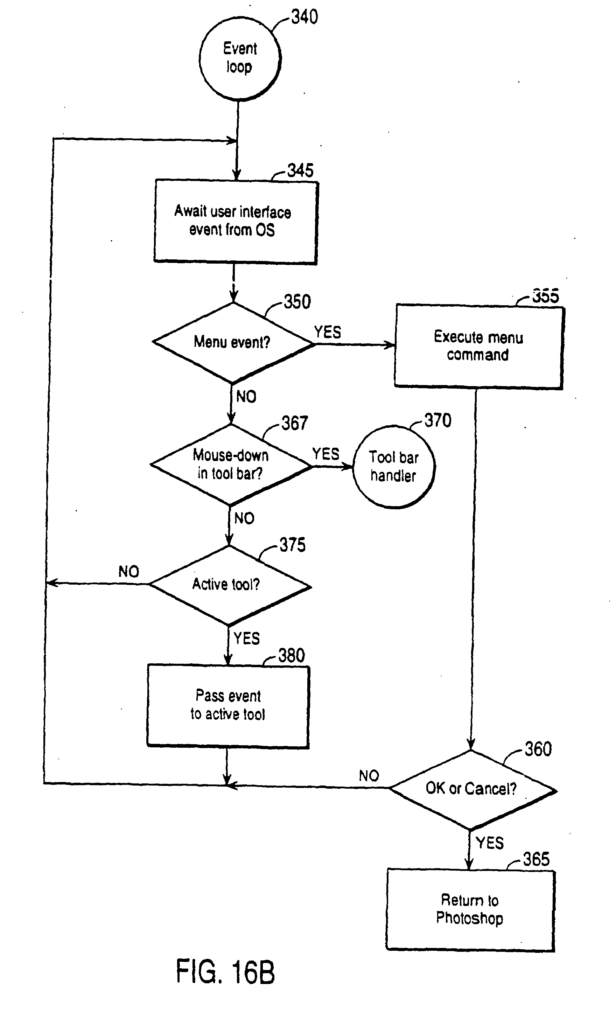

Fig. 16B is a flowchart showing FreeD's main event loop, which operates to direct user input to the appropriate handler. FreeD handles four kinds of user input: (1) user presses a key; (2) user moves the mouse; (3) user clicks the mouse button and holds down, without letting up; and (4) user lets up on the mouse button after holding it down. These are referred to as "user interface events," and are maintained in an event queue by the operating system. A user interface event can create an event signal that changes the state or FreeD. After initialization, FreeD makes an operating system call to request notification when a user interface event occurs (step 345). When a user interface event occurs, the main event loop proceeds.

How FreeD handles a user interface event depends on several factors: the current position of the mouse with respect to displayed items (could be over a menu item, a tool bar item, or the image); whether the mouse button is up or down; the current mode of FreeD, the current tool, and whether the current tool is modal or non-modal. If the user interface event is a menu event generated by the operating system in response to a mouse-down event over an item in the menu bar, as determined at a branch 350, the main event loop transfers control to the appropriate tool handler. The menu command is then executed (step 355), and, except in the case of OK or Cancel, the main event loop is re-entered (branch 360). In the case of OK or Cancel, FreeD returns to Photoshop (step 365).

If the user interface event is a mouse-down event over a tool bar icon, as determined at a branch 365, the main event loop transfers control to FreeD's tool bar handler at 370. Otherwise, if a modal tool is active, as determined at a branch 375, the event is passed to the tool handler for that modal tool (step 380), and the main event loop is re-entered.

8.3 <u>Menu Operations</u>

Menu operations in FreeD are handled by the operating system. FreeD initializes a data structure that specifies the positions and text of the various menu entries along with an id number for each entry. This data structure is passed to the operating system when FreeD starts up. When the user moves the mouse over the menu area and presses the mouse button the operating system handles the menu display and interaction. If the user selects a menu entry, the operating system adds a menu event containing the menu item's id to the event queue for FreeD. Eventually FreeD receives this event and invokes the FreeD tool associated with the menu id. Similarly, if the user presses one or more keys that are menu equivalents, the operating system adds the equivalent menu item's id to the event queue.

Several of the tools that are associated with menu entries use operating system dialog boxes to retrieve parameters from the user. To use one of these dialog boxes FreeD first builds a data structure that specifies the layout of the dialog items, their appearance, and their behavior (text item, button, etc.). FreeD then gives this description to the operating system and the dialog box is displayed. All user interaction and drawing while the dialog box is on screen is handled by the operating system. If the user hits the "Cancel" button, then the operating system returns with a canceled status code and the FreeD tool returns without doing anything. If the user hits the "OK" button, then the operating system returns with a success status code and all the data entered by the user. The FreeD tool then uses this data to complete its operation.

## 8.4 Tool Bar Handler

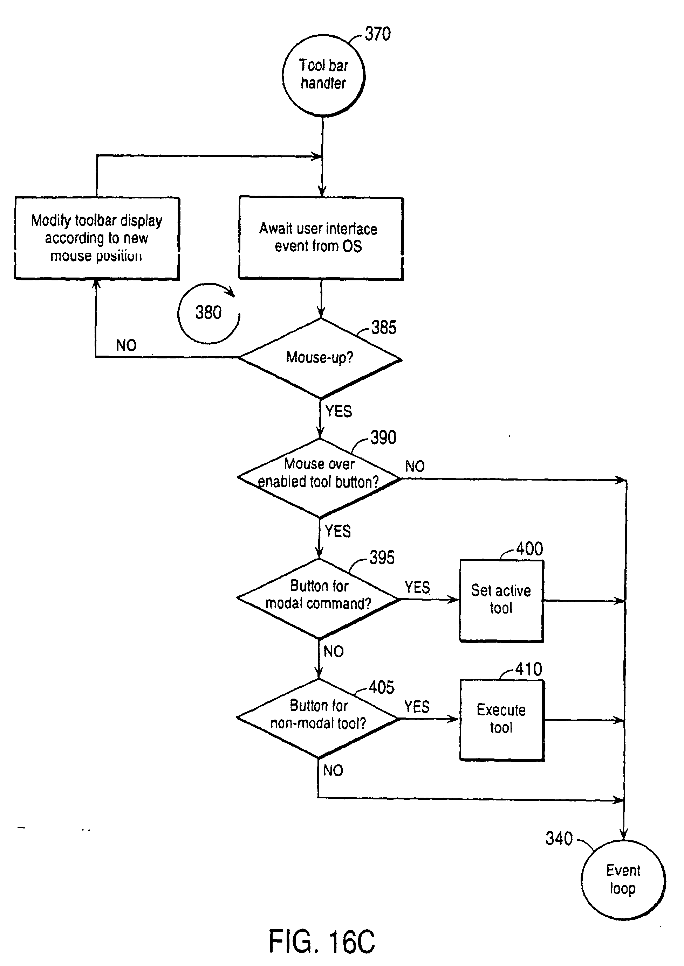

Fig. 16C is a flowchart showing FreeD's tool bar handler. As discussed in detail above, FreeD features two distinct tool bars, each corresponding to a major mode of operation. In Construction Mode, the user builds a 3D model. In Manipulation Mode, the user manipulates the 3D model. FreeD thus provides tools to construct or manipulate a 3D model, or to switch between Construction and Manipulation Modes. As mentioned above, tools are of two types: modal and non-modal.

The tool bar handler initially goes into a loop 380 waiting for a mouse-up event. If the user lets up on the mouse, as determined at a branch 385, then the user has selected the item and the tool bar handler checks at a branch 390 to ensure that the tool selected is currently enabled. If the selected tool is not enabled, the tool bar handler returns control to the main event loop.

When the user moves the mouse over an enabled tool bar icon and clicks down and up, FreeD first determines at a branch 395 whether the icon signifies a modal or a non-modal tool. The difference between modal and non-modal tools is that only modal tools can be made "active" (step 400). When a modal tool is active, it interprets user interface events in the image window as input to itself. In other words, an active tool handles all user input in the image window until the user closes the tool. This can be seen in Fig. 16A (main event loop) where user interface events are passed to the active tool handler when they don't occur in the menu bar or the tool bar.

A user closes a modal tool by initiating another user interface event from the tool bar. For example, the Zoom tool is a modal tool. When a user requests the Zoom tool, the Zoom tool becomes active. That is, FreeD enters a sub-mode in which it interprets user interface events in the image window as input to the Zoom tool until the user closes the Zoom tool. Other modal tools include the Change Field of View, Add Sharp Handle, Add Smooth Handle, Move Object, Rotate Object tools, and all the camera movement tools (Orbit, Dolly, And Slide).

A non-modal tool, by contrast, does a job and returns control immediately to the main event loop. A non-modal tool has no active or inactive phases. Non-modal tools include the Delete FreeD Object, Construct 3D Box, Construct 3D Solid of Revolution, Construct Sphere, and Reset to Default Values tools. If a non-modal tool is selected, as determined at a branch 405, the tool is executed (step 410). After executing the selected non-modal tool, the tool bar handler transfers control back to the main event loop.

## 9. FreeD Data Structures

### 9.1 Introduction

FreeD is written in the C++ programming language and makes extensive use of object oriented programming techniques. In FreeD, as in most object oriented applications, a few central class definitions form the basis of the design. The following description of FreeD's major class structure, in conjunction with the above detailed description of the underlying projective geometry technology and user interactions with the program, facilitates an understanding the whole application.

### 9.2 Tools

The code for executing each command is located in the methods of a class that is derived from the base class Tool. Each command allocates one instance of its subclass of Tool and registers a pointer to the instance along with the command's integer id in a central tool table. There is also a global variable that holds the id of the active tool.

```
class Tool {  // in tool.h

public:
        virtual -Tool(void) {};
        virtual void cmd(int32 id, int32 subid) {};
        virtual void focus(bool got) {};
        virtual void mouse(int32 kind, const Pt &pt, int32 flags) {};
        virtual void key(int32 kind, int32 ch, int32 rep, int32 flags) {};
        virtual void uiUpdate(int32 hints) {};
        virtual int32 helpMsg() const { return 0; };
        virtual void setGOFocus(GO *go) { ASSERT(false); };
        int32 getToolID() const { return m_toolid; };
        void setToolID(int32 id) { m_toolid = id; };

public:

        // codes for <kind> param of helpMsg() method
        //
        enum {
                ToolTipHelpMsg = 0,
                StatusHelpMsg = 1,
        };

protected:
        int32 m_toolid;
};
```

When the user invokes a command, the command's id is looked up in the tool table and the cmd method is invoked for the command's derived class. A modeless command completes its action and returns. On the other hand, a modal command just sets the global active tool to itself. When the active tool is changed, the tool that was originally active has its focus method called with a false parameter indicating that it is becoming inactive. The tool that is becoming active then has its focus method called with a true parameter. When a tool's focus method is called with a true parameter it sets the mouse cursor and displays a status string indicating that it is ready to handle events.

When the user moves the mouse, presses or releases the mouse button, or presses or releases a keyboard key, an event is generated by the operating system. If there is an active tool, FreeD calls the tool's method to handle the event. The mouse method is called for mouse button up or down and mouse move events and the key method is called for keyboard up or down events.

The other important tool method is uiUpdate which is called for all the registered tools when a change is made to the user interface. An example of this kind of change is when the user resizes the image window.

9.3 Reference Counted Objects

A standard method of keeping track of the ownership of objects in a software system is to use the technique called reference counting. In this method each object keeps a count of the number of references to it that exist in the system. When this count goes to 0 then the object can be deleted. FreeD uses this technique to manage the lifetimes of many of its objects. Every object that uses reference counting derives from the class *Obj* as defined below.

```
class Obj {  // in obj.h

public:
        Obj() { m_refcnt = 0; };
        virtual -Obj() {};

        // reference counting
        //
        void ref() { m_refcnt++; };
        int32 getRefcnt() const { return m_refcnt; };
        void setRefcnt(int32 cnt) { m_refcnt = cnt; };
        virtual void unref() { if ((--m_refcnt) <= 0), delete this; };

protected:
        int32 m_refcnt;  // count of references to object
};
```

When a reference is made to an object that derives from Obj, the method ref is called. When the reference is no longer needed, the method unref is called.

9.4 Objects Which Have User Visible Names and Data

Some objects in FreeD can be named by the user and also may contain user modifiable data. These objects are derived from the class *Pobj* as defined below.

```
class PObj : public Obj {  // in pobj.h

public:



PObj() {};
virtual ~PObj() {};
virtual void addPropDesc(Array<Prop,Prop&> &list);
virtual Err accessProp(Sid name, bool set, String &data);
virtual String getName() const { return m_name; };
virtual void setName(LPCTSTR name) {
        uiHint(UIHintPropChange|UIHintObjNameChange);
        m_name = name; };
virtual Sid getClassName() const { return SidObject; };

protected:
        String m_name;
};
```

*Pobj* derived objects have methods for getting and setting their names, as well as methods for reading and setting user modifiable data. *Pobj* is a subclass of *Obj*.

9.5 Geometric Objects

Each time the user defines a new geometric object in FreeD an instance of a class derived from *GO* is created to maintain the object's data. There are three subclasses of *GO* in FreeD. *GOBall* is the subclass that defines a spherical object, *GOBox* defines a rectangular solid, and GORev defines a solid of revolution. Geometric objects are edited by making calls on the methods declared in *GO*. The definition of the base class *GO* is as follows:

```
class GO : public PObj {  // in go.h

public:
    enum {
        ControlPtTypeDefining = 0,
        ControlPtTypeSharp = 1,
        ControlPtTypeSmooth = 2,
    };
    enum {
        ControlEdgeTypeNotSplitable = 0,
        ControlEdgeTypeSplitable = 1,
    };

public:
    GO(void);
    virtual ~GO(void);
    virtual bool render(RenderParm &rp) { return true; };
    virtual RRect cover(Camera *c) const { return rrectMin; };
    virtual void addPropDesc(Array<Prop,Prop&> &list);
    virtual Err accessProp(Sid name, bool set, String &data);
    virtual void setSelected(bool s);
    virtual void setVisible(bool b);
    virtual void setGhost(bool ghost);
    virtual void setXform(const Xform &t) {
                         uiHint(UIHintPropChange); damage();
                         m_xform = t; damage(); };
    virtual void setCamera(Camera *c);
    virtual bool mouse(Tool *tool, int32 kind, const Pt &pt,
                       int32 flags) { return false; };
    virtual void key(Tool *tool, int32 kind, int32 ch,
                     int32 rep, int32 flags) { };
    virtual void select(SelectParm &sp) {};
    virtual bool getRefFrame(Xform &frame) const {
                         frame = xformIdent; return false; };
    virtual void uiUpdate(int32 hints) { };
    virtual void move(const Pt &pt) { };
    virtual void setControlPt(int32 v, const Pt &pt) {ASSERT(false);};
```

```
virtual Pt getControlPt(int32 v) const {
                 ASSERT(false); return ptZero; };
virtual int32 getControlPtType(int32 v) const {
                 return ControlPtTypeDefining; };
virtual int32 numControlPt() const { return 0; };
virtual int32 numControlEdge() const { return 0; };
virtual void getControlEdge(int32 v, Pt &p0, Pt &p1) const {
                 ASSERT(false); };
virtual int32 getControlEdgeType(int32 v) const {
          return ControlEdgeTypeNotSplitable; };
virtual void getFaceList(Camera *cam, Array<Face*,Face*> &list,
                 bool forrendering) {};
virtual Bbox getBbox() const { return bboxMin; };
virtual void getCamNearFar(Camera *cam, flt64 &ndist,
                 flt64 &fdist) const {};
virtual bool supportsCurveEditing() const { return false; };
bool getVisible(void) const { return m_visible; };
bool getGhost(void) const { return m_ghost; };
Xform getXform(void) const { return m_xform; };
Camera *getCamera(void) const { return m_cam; };
Array<Camera*,Camera*> &getTxCameraList() { return m_txcam; };
bool getSelected(void) const { return m_selected; };
Ray getYAxis();
void damage(void) const;
Array <Pt,Pt&> *getVertexList() { return &m_vert; };
Array <Vec,Vec&> *getNormalList() { return &m_norm; };

protected:
bool m_visible;  // true if object is visible
bool m_selected;  // true if object is selected
bool m_ghost;  // true if ghost should be covered up
Xform m_xform;  // object space to world space transform
Camera *m_cam;  // defining camera for object
Array<Camera*,Camera*> m_txcam;  // for texturing
Array <Pt,Pt&> m_vert;  // world space vertices for faces
Array <Vec,Vec&> m_norm;  // normals for faces
};
```

The position, orientation, and shape parameters of geometric objects are defined by a set of 2D vertices located on the projection surface of the objects defining camera. The defining camera is set using the *setCamera* method. The number of defining vertices is returned by the *numControlPt* method. There are also a set of defining edges for an object which are the projections of the 3D objects silhouette. The number of these edges is returned by *numControlEdge*. The locations of the defining vertices can be set with *setControlPt* and *move.* Whenever a defining control point location is changed the object recalculates its position, orientation, and shape parameters. The vertices of the 3D shape of the object are available using the *getVertexList* method. As stated before the 3D position, orientation, and shape of a geometric object is defined by the locations of its defining points. However, the 3D position, orientation and overall scale of an object can be further altered by calling the *setXform* method. All objects are converted to a collection of 3D "faces" before being rendered. Faces are triangles or planar quadrilaterals. The faces that represent a geometric object are available by calling *getFaceList.* Finally the render method is called to render an object.

9.6 Undo and Redo

The multiple level undo and redo capability is an important aspect of the usability of FreeD. The class *Undo* is a virtual base class for a set of derived classes that contain data that can be used to undo or redo the action of FreeD commands. The definition of *Undo* is:

```
class Undo {  // in undo.h

public:
    virtual ~Undo(void) {};
    virtual void execute(bool undo) = 0;
    virtual void release(bool undone) {};
};
```

The execute method is called with a true parameter to undo the action of a command or with false to redo its work. The release method is called when an undo command is deleted from the undo stack.

An undoable action may actually consist of multiple low level commands that are executed in a specific order. In order to keep this detail hidden from the user the class *UndoTrans* is defined. *UndoTrans* holds a sequence of Undo instances and has a string that shows in the undo and redo menu entry when the transaction is at the top of the undo stack.

Each time the user does a command that is undoable, FreeD builds a set of one or more instances of *Undo* derived classes that contain the data necessary to undo the command. These objects are then packaged into a new instance of *UndoTrans* along with a string describing the command. The new instance of *UndoTrans* is then pushed onto a stack that is maintained by an instance of *UndoStack* which is defined as follows:

```
class UndoStack {   // in u_stack.h

public:
        UndoStack(int32 max=20);
        ~UndoStack(void);
        void clear(void);
        UndoTrans* push(Sid name);
        void getLabels(Sid &undolabel, Sid &redolabel);
        void setMaxDepth(int32 max);
        void execute(bool undo);
        void executetos(bool undo);

private:
        void shrinkStack(int32 size);
        void cutStack();

private:
        bool m_dirty; // true if the world is dirty even with no undos
        Array<UndoTrans, UndoTrans&> m_stack;  // undo trans stack
        int32 m_tos;  // index of current top of stack.  -1  -> empty stack
        int32 m_maxdepth;  // max number of undo entries allowed
};
```

The methods of *UndoStack* implement a standard LIFO stack of *UndoTrans* instances.

## 9.7 Camera

There are two instances of the *Camera* class. These objects hold the data required to render images and interact with the user. One camera object is used for the construction mode interface and the other is used for manipulation mode. Camera objects contain the data necessary to control the rendering of images.

## 9.8 World

There is one instance of the *World* class. The world object contains the geometry database. This database is a list of GO instances that holds the data for each of the geometric objects defined by the user. The world object also contains the *UndoStack* object that holds data for the current set of undoable commands. Lastly the world object contains the two *Camera* objects and an indication of which is currently active.

## 10. Additional Features

## 10.1 Additional Viewing Options

In the current implementation as a Photoshop plugin, FreeD subsamples the input image and converts it to grayscale. This was done mainly for speed reasons since the initial target machine was the 386 class PC. Advances in machine speed have made this unnecessary, although still useful. It would be preferred to allow the user additional viewing options. One set of options is to allow the user to view the image in color in both construction mode and manipulation mode. This can be done using the full resolution, full color image, or a lower resolution or lower bit depth (fewer colors) version thereof.

It would also be advantageous for the user to specify that the construction and manipulation mode windows be visible at the same time. This would allow the user to check the construction mode fit more quickly.

One of the potential disadvantages of trying to fit the cage over a full color image is that the cage may be hard to see. This can be dealt with in a number of ways. For example, the user can be given the ability to alter the color or other appearance attributes of the cage, such as flashing on demand, or displayed as "marching ants" (formed of broken lines whose patterns move along the path, somewhat akin to theater marquee chase lights). Alternatively, the user could be provided with the ability to reduce the image chroma so that a colored cage would stand out more.

10.2 Adding Textures to the Backs of Objects

The current implementation of FreeD can ascertain the 3D shape, orientation, and position of an object pictured in a 2D image, and can map the appropriate portions of the original image onto the visible surfaces of 3D objects that it constructs. This is a very powerful capability, but one that could be enhanced by having image textures applied to all surfaces, including the surfaces that were not visible in the original image.

There are several ways to add textures to the surfaces that are not visible in the original 2D image of a 3D object. One way is to copy textures from visible surface to those that are not visible. This method works well for some applications where accurate renditions are not necessary, but only a general sketch of an object is required. An example might be making a cereal box for a virtual stage set. The front, one side, and top of the box could be replicated to the back, other side, and bottom. One possible user interface for surface texture replication would be to define Texture Replication as an additional object property, and provide a check box in the property dialog for the object indicating whether that feature is requested. If this check box was checked, then internally the back surfaces would get flipped copies of the textures from the opposing visible surface. This would also likely be suitable in cases where the object was only rotated slightly in manipulation mode.

Another way to provide textures for surfaces that are not visible in the original 2D image is to allow the user to use a painting tool to paint directly onto the surfaces. This kind of tool is available in several commercial products such as Fractal Design Detailer. Image data can be imported from elsewhere and stretched, shrunk, or warped it until it fits the surface. Since FreeD already stretches, shrinks, and warps its images to achieve the correct appearance, the implementation of the "paint" interface would be a straightforward extension.

Alternatively, a picture or pictures of the back side of the 3D object being created could be used to obtain textures. The new images would not be required to provide shape information as they are in other 3D from 2D software packages but primarily to provide textures for back surfaces. One possible user interface for using extra images would work by rendering a view of the previously constructed 3D object into the new image along with some handles. The user could then move these handles to the correct places on the image of the 3D object. This is very similar to the user interface in the current embodiment except in this case no 3D model is being constructed (since it already exists). The point of the user interactions in this case is to change the camera parameters associated with the secondary image such that the rendered view of the 3D object matches the view of the object in the image. Once this matching has taken place, the portions of the image that correspond to surfaces faces on the 3D object can be applied as textures. Thus, this technique lends itself very well to images that are obtained from unstructured "walk around" videos taken with a camcorder and captured by computer video input device.

10.3 Creating Stencils for External Programs

The problem discussed above, namely that a single image contains no explicit information on what is on hidden surfaces, is related to a similar problem, namely that a single image contains no explicit information on what is on hidden behind a pictured object. Currently, FreeD allows the user to address the problem in either of two ways by setting the object's "Show Ghost" property to one of two values. If all that is needed is another instance of the same object, the user can set the Show Ghost property so as not to show the ghost (i.e., to leave the image of the pictured object in place), and there is no problem. If, however, the object in its original location must be removed, the user sets the object's Show Ghost property to show the ghost. When the user moves such an object, a gray "hole" remains where the object used to be.

The user must then call on an external image manipulation program (such as Adobe PhotoShop) to clean up or touch up the hole, by painting over it and fixing shadows. However, the external program doesn't have specific information on what areas FreeD has touched. So while users would like to modify only the areas affected by FreeD, they have no automatic way to guard against modifying other pixels as well when they attempt to paint out the ghost. However, since FreeD always keeps a record of the changes it makes to an image, it is in a unique position to generate a stencil or mask - a representation of the picture outlining the area(s) affected by FreeD. Thus the user can be certain to touch up only the areas affected by FreeD.

One possible approach to the problem, applicable where it is possible to acquire additional images of the region behind the object, would be to use information from the additional images to fill in the hole.

10.4 Computer-Assisted Placement of Control Elements

In the specific implementation, the user is completely responsible for mapping the control elements (handles and edges) to picture locations (i.e., register the cage to the image). However, there can be different divisions of labor between the user and the computer when it comes to establishing the mapping of control elements to picture locations. As mentioned above, the invention exploits the user's natural ability to recognize shapes in pictures, and the user placement of control elements is extremely effective. At the other extreme would be full-blown computerized image analysis for recognition of shapes in images. While current technology is generally not sufficiently robust or efficient for full recognition, some embodiments of the invention could allow the computer to perform some image analysis once the user has specified locations in the picture for placement of control elements. In such embodiments, the system would operate to refine the user's placement of control elements to establish the mapping. Thus known techniques for edge detection, hill climbing, genetic algorithms, simulated annealing, and the like can be implemented to perform local optimization of the control element placement. Depending on the desired implementation, manual placement or computer-refined placement could be the default.

10.5 Relationships Between Objects

The current embodiment of FreeD can ascertain the 3D shape, orientation, and position of an object pictured in a 2D image. The technology described in the current embodiment cannot give the absolute distance of the object from the viewpoint, but only the relative distances of the object's vertices.

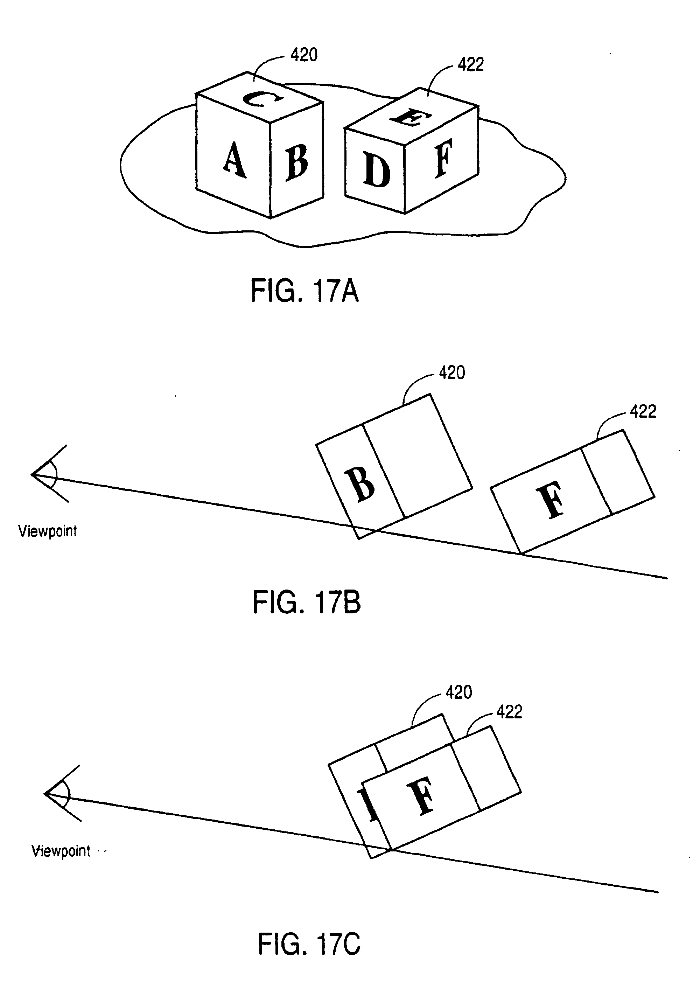

Figs. 17A - 17C show how information about relationships between objects can be used to provide additional positional information. When multiple objects 420 and 422 are constructed as in Fig. 17A the lack of knowledge of distance from the viewpoint leads to an alignment problem. This problem is shewn in Fig. 17B which is a right side view of the objects constructed from Fig. 17A. Notice that the objects do not have their bottom surfaces resting on the same plane. This is a perfectly valid interpretation of Fig. 17A, but one that would surprise most users.

A new kind of input from the user, called a "relationship" could be used to eliminate this problem. If the user had a way to specify that both objects 420 and 422 were sitting on the same plane, then object 422 could be moved forward until its bottom is aligned with object 420 as in Fig. 17C. This is also a valid interpretation of Fig. 17A, but one that has the added benefit of satisfying the user supplied relationship. FreeD could simply ask the user to specify any desired (and possible) geometric constraints. Using this information, FreeD could then infer the position and orientation of new objects. For example, if the user specified that several objects are set on a table (a single plane), FreeD could calculate the relative distance from the eye for all the objects on the table.

This scheme of allowing the user to specify relationships between objects fits quite nicely into the general design goal of having the user specify things that are hard for the computer to recognize while having the computer do the mathematical work building 3D models from the input.

Although automatically placing objects in response to stated relationships is a highly useful functionality, it is also desirable to allow the user some control. One way to allow the user to deal with the problem of ambiguity of distance from the viewpoint is to provide a "constrained" move tool in manipulation mode that would allow the user to move 3D objects only further from or closer to the viewpoint. This tool would also take care of expanding or shrinking the scale of the object so that it still maps correctly in the construction mode view.

In many circumstances, it would be possible for FreeD to automatically calculate the 3D position and orientation of additional objects relative to already-positioned objects. One example is the case of a new object that shares control points with a 3D object whose coordinates are already known. Consider the user to have positioned two boxes. If the user then specified a 2D plate that connects to corners of the boxes, FreeD could infer the position, shape, and orientation of the plate.

10.6 Measuring Real Objects

Everyone who is image-literate knows that a golf ball in one picture can look as big as a volleyball in a different picture, depending on how the pictures are shot. FreeD isn't confused either. FreeD doesn't need to know how big or small any pictured object really is, since all FreeD models are in the correct scale with respect to each other.

However, since the absolute unit of measure might matter for some applications, FreeD could offer the user the option to specify absolute measurements of pictured objects. The user would not need to know very much. For example, if the user knew the real length of just one side of a box and communicated that to FreeD, FreeD could automatically compute all the other real dimensions. This is useful for taking rough measurements of very large objects (e.g., box-like buildings, fields) from 3D models generated from photographs, plus one real measurement (e.g., the length along the street), without surveying tools. User-provided specific dimensions or relative dimensions for multiple objects could further aid in maintaining relationships among the objects. For example, if the user knew that two objects in the scene were approximately the same size, this would be useful information for determining relative distances from the viewpoint.

### 10.7 Lighting and Shadows

Information regarding lighting and shadows allows the creation of more realistic models, and the inference of information about the objects pictured in an image. FreeD could thus create and modify lighting effects on its 3D models by applying standard 3D rendering technology to its internal stored image data.

If the characteristics of the light that illuminated the objects in the image are known, these characteristics could be used to glean information about how the object would look under different lighting. This can be relevant when the object is moved within the same scene, but may be more relevant when a modeled object is placed in a different scene with different lighting characteristics. Knowledge of the lighting characteristics also aids the generation of proper shadows for objects newly placed in the scene or objects moved from one place to another in the scene.

In addition, FreeD could analyze the shading information in the data, enabling it to calculate the intensities and positions of the lights that were used to produce the original image. Users could thus re-create the lighting conditions of the original image and then render additional objects into a scene with compatible lighting. Users could thus combine FreeD objects from diverse sources, with diverse light sources, into consistently lit 3D environments. By creating and combining multiple FreeD objects from multiple photographs and multiple sources and textures, FreeD users could easily create complex, unique, consistently lit, realistic-looking 3D environments (worlds) for use in entertainment and games applications.

The shadows themselves could enhance the characterization of the lighting, and further could provide additional information about the objects. Humans often infer the shapes of objects from the shadows that the objects cast on other surfaces. If the intensity and direction of the lighting for an object are known, then it may be possible to accurately infer and model an object's shape from its shadow.

### 10.8 Directly Calculating Field of View Angle and Camera Aim Point

FreeD is already successful in hiding the complexity of 3D technology from the ordinary non-technical user. The user, who interacts by dragging the cage's handles over the corners of a pictured box, need not know any of the underlying projective geometry that is changing the size and shape of the cage as the handles are moved. However, some complexity "leaks through" to the user interface in two places: (1) the determination of the field of view angle of the camera used to produce the input image; and (2) the determination of the point on the image where the camera was aimed (the "center point"). Both field of view and center (aim) point are crucial parameters to the mathematics underlying FreeD. They are essential in some cases to optimize the fit of the cage (template) over the 2D picture.

Users who are technically proficient in optics and photography immediately understand the significance of these parameters, and use them. But more naive users see only that the cage "doesn't quite fit" and think something is wrong with FreeD. FreeD could help the naive users by automating the computation of field of view angle and center point as much as possible. A couple of strategies follow.

### 10.8.1 Specifying More Control Points

Currently users specify a 3D box by placing four control handles. If the field of view or center point for the image is not correct, then the box vertices not covered by control points do not lie over the top of the vertices in the image. However, FreeD could permit the user to indicate the placement of one or more extra box vertices on the image. FreeD would then vary the field of view and aim point to produce a box whose vertices matched the new input as well as the original four vertices.

At this time a closed form solution to the problem of finding the field of view angle and aim point from the new vertices is not known. It is not even known if the problem is properly constrained so that there is a unique solution. There is, however, a closed form technique for finding the actual field of view angle given the images of the four vertices of a rectangular plate, and given the center (aim) point. Because the technique applies to rectangular plates, it is not a general solution, but is suited to FreeD boxes, since a box usually presents three such plates to the user. The technique is:

1. Calculate the focal distance from the field of view angle fov:

   $f = (imagediag / 2) / (tan(fov / 2))$

   where imagediag is the diagonal measurement from corner to opposite corner of the image.

2. Label the image locations of the four vertices A, B, C, and D in clockwise order. Calculate the N-vectors $m_A$; $m_B$, $m_C$, and $m_D$ for each of the points:

$$m_A = N[(A_x, A_y, f)], m_B = N[(B_x, B_y, f)],$$

$$m_C = N[(C_x, C_y, f)], m_D = N[(D_x, D_y, f)].$$

where f is an initial estimate of the focal length, and N[...] is a function that normalizes its parameter vector.
3. Calculate the N-vectors, $n_{AB}$, $n_{BC}$, $n_{CD}$, and $n_{DA}$ of the edges that connect the four vertices:

$$n_{AB} = N[m_A \times m_B], n_{BC} = N[m_B \times m_C],$$

$$n_{CD} = N[m_C \times m_D], n_{DA} = N[m_D \times m_A].$$

where $\times$ is the vector cross product.
4. Calculate the N-vectors of the vanishing points of edges AB and CD and also BC and DA as follows:

$$m = N[n_{AB} \times n_{CD}], m' = N[n_{BC} \times n_{DA}].$$

5. Calculate the correct focal distance as follows:

$$f' = f * (-((m_x * m'_x) + (m_y * m'_y)) / (m_z * m'_z))^{1/2}$$

where the subscripts x, y, z indicate the components of vectors m and m'.
6. Transform the new focal distance into a field of view angle:

$$fov' = 2 * \arctan((imagediag / 2) / f')$$

This technique works well if the image of the box is heavily warped by perspective effect. However, it becomes increasingly inaccurate as the perspective effect is diminished. The technique is also limited because it requires knowledge of the camera center (aim) point.

10.8.2 Optimizing Both Field of View Angle and Aim Point

FreeD could provide automatic help to the naive user, even if both the field of view angle and center point were wrong, as in a cropped image where the center point has been shifted. FreeD could fall back on a generalized search mechanism such as hill-climbing or genetic algorithm to find the best "fit." All such schemes maximize a "goodness of fit" value which is computed for sets of parameters. Here the value is the sum of the geometric distances between the user-selected locations for the vertices and the locations of the vertices calculated by FreeD.

10.9 Additional Shapes

The version of FreeD described in detail above features three core 3D shapes (templates): box, sphere, and solid of revolution (cylinder). Users can easily produce discrete boxes, spheres, and solids of revolution, but it requires more sophistication and determination to combine shapes to make complex models such as a box-like base with a dome (hemisphere) top.

10.9.1 Combining, Extruding, and Rounding Objects

FreeD could provide tools for automatically combining objects. The user would specify "connect" links between discrete objects. For example, a simple sledge hammer is an oblong box with a long thin cylinder attached to it. The user fits the box and cylinder separately and then tells FreeD to "connect" the box and cylinder. The box and cylinder, once connected, would constitute a single 3D object, to which all FreeD manipulation mode operations could be applied.
As described above, the current implementation of FreeD allows the user to create a model of a pictured complex 3D solid of revolution by tracing the outline of a pictured complex solid of revolution (adding sharp and smooth handles as needed, and then placing the handles appropriately to fit the shape of the pictured object). In a like manner to this feature, FreeD could be enhanced to provide the ability to extrude objects. First, the user would select a box or cylinder or sphere in FreeD's construction mode. Then the user would superimpose the selected shape over the object to be modeled. The user would then trace one side of the object by fitting FreeD's handles over the appropriate edges, and adding sharp or smooth handles as necessary. From this traced cross-section, FreeD could derive the shape of the corresponding 3D object.

Non-symmetrical objects could be created with the "connect" and extrusion capabilities just described.

Some shapes are box-like but have rounded corners or rounded edges. The specific implementation of FreeD automatically creates only sharp angular boxes, but the ability to trace cylindrical shapes and, in effect add rounded extrusions to the sides of solids of revolution could be extended to round off edges of boxes.

10.9.2 <u>More Complex Shapes</u>

Some of the more complicated shapes, such as the shape of a chair or a car or a human body, are familiar and instantly recognizable. Specialized shapes could be modeled in parametric form. That is, the general properties or attributes (parameters) of specialized shapes can be known in advance, even if one does not know the exact dimensions of the object at hand. For example, although a user might not know the exact shape of a specific car, the user does know general car parameters, such as the fact that cars have four wheels, all wheels are round and the same size, the axes are parallel between the two wheels, there are four sides, etc. FreeD could know general car parameters, too, and provide a general "car template" that a user could then fit over a picture of a specific car to create a 3D model of it.

In general, FreeD could provide, or give users the tools to create, complex templates geared to special user needs: chairs, tables, vases, cabinets, and the like for interior designers; car bodies, engines, wheels, windshields, and the like for car designers; baseball bats, tennis rackets, football helmets, specially shaped balls for soccer, football, tennis, and the like for sports equipment designers.

11. <u>Conclusion</u>

In conclusion, it can be seen that the present invention provides the user with powerful and easy-to-use techniques for performing difficult tasks such as extracting and manipulating 3D objects in 2D representations of 3D scenes, and placing modeled 3D objects in 2D representations of 3D scenes. As discussed in detail above, a user, by simply placing control handles over corresponding feature points in the image, can create a 3D model without ever knowing anything about 3D perspective geometry and texture mapping. The user need not know the difference between 2D image editing and 3D modeling, and can remain oblivious to the fact that both activities are in fact being carried out.

While the above is a complete description of specific embodiments of the invention, various modifications, alternative constructions, and equivalents may be used. Therefore, the above description should not be taken as limiting the scope of the invention as defined by the claims.

**Claims**

1. In an interactive computing environment, a method of modeling three-dimensional (3D) objects, the method comprising the steps of:

   (a) displaying a two-dimensional (2D) representation of a 3D scene, the 2D representation defining an image plane;
   (b) in response to user input, establishing a mapping between a set of control elements of a modeled 3D object and a corresponding set of positions relative to the scene, which positions represent desired locations in the scene for the control elements of the modeled 3D object;
   (c) determining, on the basis of the mapping, an orientation and position of the modeled 3D object in 3D space; and
   (d) projecting at least some elements of the modeled 3D object, with the orientation and position, so determined, onto the image plane to provide a 2D representation of the modeled 3D object in the scene with the modeled 3D object having its control elements located at the desired locations.

2. The method of claim 1, wherein establishing a mapping in response to user input includes:

in response to first user input, specifying a set of control points of a modeled 3D object; and
in response to second user input, placing the set of control points at positions relative to the scene, which positions represent desired locations in the scene for the control points of the modeled 3D object.

3. The method of claim 2, wherein the set of control points contains the minimum number of points required to uniquely define the shape and orientation of the modeled 3D object in 3D space.

4. The method of claim 2, wherein said steps (b) and (c) are interleaved.

5. The method of claim 2, wherein said step (b) is performed before said step (c).

6. The method of claim 2, wherein said step (c) is performed before said step (b).

7. The method of claim 2, and further comprising the step, performed in connection with said step of placing a set of control points, of displaying a wireframe representation of the modeled 3D object.

8. The method of claim 2, wherein:

the method further comprises the step of displaying a wireframe representation of the modeled 3D object with highlighted control points;
the first user input is produced by the user using a pointing device to drag at least one highlighted control point from an initially displayed position to the desired location for that control point.

9. The method of claim 1, wherein determining an orientation and position comprises:

determining, on the basis of the mapping, an orientation, shape and position of the modeled 3D object in 3D space.

10. The method of claim 9, wherein the 2D representation of the modeled 3D object projected on the image plane has a number of visible surface portions in the image plane, the method further comprising:

associating regions of the 2D representation with respective visible surface portions of the modeled 3D object, so projected; and
in response to additional user input that specifies modifying at least one geometrical parameter of the modeled 3D object, displaying a 2D representation of the modeled 3D object with the at least one geometrical parameter modified, the modeled 3D object having the associated regions of the 2D representation correspondingly modified;
whereby, when the control points are placed in response to the first user input substantially on corresponding points of the pictured object, the modeled 3D object appears as the pictured object, but with the at least one geometrical parameter modified.

11. The method of claim 9, wherein the two-dimensional (2D) representation includes a two-dimensional (2D) bitmap image of a 3D object, a portion of the 2D representation representing the 3D object, the 2D representation of the modeled 3D object projected on the image plane having a number of visible surface portions in the image plane, the method further comprising:

associating a region of the image with each visible surface portion of the modeled 3D object, so projected; and
in response to third user input that specifies modifying at least one geometrical parameter of the modeled 3D object, displaying a 2D representation of the modeled 3D object with at least one geometrical parameter modified, the modeled 3D object having the associated regions of the image correspondingly modified;
whereby, when the control points are placed in response to the first user input substantially on corresponding points of the pictured object, the modeled 3D object appears as pictured object, but with the at least one geometrical parameter modified.

12. The method of claim 11, wherein:

the 2D bitmap image is a tower-resolution version of an original 2D bitmap image; and
the method further comprises the step, performed after step (g) in response to fourth user input, of displaying, at the resolution of the original 2D bitmap image, the 2D representation of the modeled 3D object with the at least one geometrical parameter modified.

**13.** The method of claim 11, wherein:

the 2D bitmap image is a lower-resolution version of an original 2D bitmap image; and
the method further comprises the step, performed after step (g) in response to fourth user input, of displaying, in the original 2D bitmap image and at the resolution of the original 2D bitmap image, the 2D representation of the modeled 3D object with the at least one geometrical parameter modified.

**14.** The method of claim 13, wherein:

the original 2D bitmap image is a color image; and
the 2D bitmap image displayed in step (a) is a grayscale image.

**15.** The method of claim 11, wherein the set of control points contains the minimum number of points required to uniquely define the modeled 3D object.

**16.** The method of claim 2, wherein said at least one geometrical parameter is one of the group consisting of rotational orientation and rectilinear position.

**17.** The method of claim 2, and further comprising the step, performed in connection with said step of placing the set of control points, of displaying a wireframe representation of the modeled 3D object, with the control points highlighted.

**18.** The method of claim 1, wherein the two-dimensional (2D) representation includes a two-dimensional (2D) bitmap image representing a 3D object, a portion of the image representing the 3D object, and establishing a mapping including:

in response to first user input, placing a set of control points at positions relative to the image, which positions characterize a modeled 3D object of a specified type, the modeled 3D object having a number of visible surface portions; and
associating a region of the image with each surface portion of the modeled 3D object;
the method further comprising in response to second user input that specifies modifying at least one geometrical parameter of the modeled 3D object, displaying a 2D representation of the modeled 3D object with the at least one geometrical parameter modified, the modeled 3D object having the associated regions of the image correspondingly modified;

whereby, when the control points are placed in response to the first user input substantially on corresponding points of the pictured object, the modeled 3D object appears, in response to the second user input, as the pictured object, but with the at least one geometrical parameter modified.

**19.** The method of claim 18, wherein the set of control points contains the minimum number of points required to uniquely define the shape and orientation of the modeled 3D object in 3D space.

**20.** The method of claim 18, wherein said at least one geometrical parameter is one of the group consisting of rotational orientation and rectilinear position.

**21.** The method of claim 18, and further comprising the step, performed in connection with said step of placing a set of control points, of displaying a wireframe representation of the modeled 3D object.

**22.** The method of claim 18, wherein the modeled 3D object is one of the group consisting of a solid of extrusion such as a rectangular solid, and a solid of revolution such as an ellipsoid or a cylinder.

**23.** The method of claim 18, wherein the bitmap image includes a digitized photograph of the object.

**24.** The method of claim 18, wherein the bitmap image includes a rendered 2D projection of a 3D computer model of the object.

**25.** The method of claim 18, wherein the bitmap image includes line art representing the object.

**26.** The method of claim 1, wherein determining an orientation and position includes creating a model of a 3D object, referred to as the modeled 3D object, of a specified type, the modeled 3D object being **characterized by** a set of control elements having respective coordinates in three dimensions, the respective coordinates defining a 3D position and orientation of the modeled 3D object and a set of proportions, the method further comprising:

receiving user input specifying displacement in the image plane, of at least one of the control elements so as to specify a modified set of projected control elements;
determining whether the modified set of projected elements is consistent with a projection of a modeled object of the specified type, with possibly modified position, orientation, and proportions, onto the image plane; and if so,
determining new 3D coordinates for the modeled 3D object consisting with the modified set of projected elements,
projecting the modeled 3D object, with the new 3D coordinates onto the image plane to define a new set of projected elements, and
displaying the new set of projected elements.

**27.** The method of claim 26, wherein:

the control elements are control points; and
said user input specifying displacement comprises signals generated by a pointing device when the user drags on one of the control points.

**28.** The method of claim 26, wherein the set of control points contains the minimum number of points required to uniquely define the shape and orientation of the modeled 3D object in 3D space.

**29.** The method of claim 26, wherein the set of control points contains more than the minimum number of points required to uniquely define the modeled 3D object.

**30.** The method of claim 26, wherein said step of displaying the set of projected edges and projected control points includes displaying a wireframe representation of the modeled 3D object.

**31.** The method of claim 9, wherein the 2D representation includes a 2D image showing a 3D object, wherein establishing a mapping comprises:

displaying a wireframe cage representing a modeled 3D object projected onto the image plane, the cage having a set of control elements; and
in response to user input, establishing a mapping between the set of control elements of the cage and a corresponding set of positions in the image plane, which positions represent desired locations in the image for the control elements of the modeled 3D object.

**32.** The method of claim 31, further comprising:

projecting at least some elements and some surface portions of the modeled 3D object, with the orientation and position, so determined, onto the image plane, the modeled 3D object, so projected, having a number of visible surface portions in the image plane;
associating regions of the image with respective visible surface portions of the modeled 3D object, so projected; and
in response to additional user input that specifies modifying at least one geometrical parameter of the modeled 3D object, displaying a 2D representation of the modeled 3D object with the at least one geometrical parameter modified, the modeled 3D object having the associated regions of the image correspondingly modified;
whereby, when the control elements are placed in response to the first user input substantially on corresponding elements of the pictured object, the modeled 3D object appears, in response to the additional user input, as the pictured object, but with the at least one geometrical parameter modified.

**33.** The method of claim 32, wherein the set of control elements are characteristic points on the modeled 3D object.

**34.** The method of claim 33, wherein the set of points contains the minimum number of points required to uniquely define the shape and orientation of the modeled 3D object in 3D space.

**Patentansprüche**

**1.** Ein Verfahren zum Modellieren dreidimensionaler (3D) Objekte in einer interaktiven Rechnerumgebung, wobei das Verfahren die Schritte umfaßt:

(a) Anzeigen einer zweidimensionalen (2D) Darstellung einer 3D-Szene, wobei die 2D-Darstellung eine Bildebene definiert;
(b) Bilden einer Zuordnung zwischen einem Satz von Steuerelementen eines modellierten 3D-Objekts und eines entsprechenden Satzes von zu der Szene gehörenden Positionen in Abhängigkeit von einer Benutzereingabe, wobei die Positionen Sollpositionen in der Szene für die Steuerelemente des modellierten 3D-Objekts darstellen;
(c) Bestimmen einer Orientierung und Position des modellierten 3D-Objekts im 3D-Raum auf Grundlage der Zuordnung; und
(d) Projizieren wenigstens einiger Elemente des modellierten 3D-Objekts mit der so bestimmten Orientierung und Position auf die Bildebene, um eine 2D-Darstellung des modellierten 3D-Objekts in der Szene bereitzustellen, wobei sich die Steuerelemente des modellierten 3D-Objekts an den Sollpositionen befinden.

**2.** Das Verfahren gemäß Anspruch 1, wobei eine Zuordnung in Abhängigkeit von einer Benutzereingabe enthält:

Spezifizieren eines Satzes von Steuerpunkten eines modellierten 3D-Objekts in Abhängigkeit von einer ersten Benutzereingabe; und
Anordnen des Satzes von Steuerpunkten an zu der Szene gehörigen Positionen in Abhängigkeit von einer zweiten Benutzereingabe, wobei die Positionen Sollpositionen für die Steuerpunkte des modellierten 3D-Objekts in der Szene darstellen.

**3.** Das Verfahren gemäß Anspruch 2, wobei der Satz von Steuerpunkten die minimale Anzahl von Punkten enthält, die zum eindeutigen Definieren der Form und Orientierung des modellierten 3D-Objekts im 3D-Raum erforderlich ist.

**4.** Das Verfahren gemäß Anspruch 2, wobei die Schritte (b) und (c) verschachtelt sind.

**5.** Das Verfahren gemäß Anspruch 2, wobei der Schritt (b) vor dem Schritt (c) ausgeführt wird.

**6.** Das Verfahren gemäß Anspruch 2, wobei der Schritt (c) vor dem Schritt (b) ausgeführt wird.

**7.** Das Verfahren gemäß Anspruch 2, ferner mit dem Schritt des Anzeigens einer Drahtmodelldarstellung des modellierten 3D-Objekts, der in Verbindung mit dem Schritt der Plazierung eines Satzes von Steuerpunkten ausgeführt wird.

**8.** Das Verfahren gemäß Anspruch 2, wobei:

das Verfahren ferner den Schritt des Anzeigens einer Drahtmodelldarstellung des modellierten 3D-Objekts mit hervorgehobenen Steuerpunkten aufweist;
die erste vom Benutzer getätigte Benutzereingabe unter Verwendung eines Zeigegeräts erfolgt, um wenigstens einen hervorgehobenen Steuerpunkt von einer anfänglich angezeigten Position zu der Sollposition des Steuerpunktes zu ziehen.

**9.** Das Verfahren gemäß Anspruch 1, wobei ein Bestimmen einer Orientierung und Position umfaßt:

Bestimmen einer Orientierung, Form und Position des modellierten 3D-Objekts im 3D-Raum auf Grundlage der Zuordnung.

**10.** Das Verfahren gemäß Anspruch 9, wobei die 2D-Darstellung des auf die Bildebene projizierten modellierten 3D-Objekts eine Anzahl von sichtbaren Oberflächenabschnitten in der Bildebene aufweist, wobei das Verfahren ferner enthält:

Zuordnen von Bereichen der 2D-Darstellung zu entsprechenden sichtbaren Oberflächenabschnitten des derart projizierten, modellierten 3D-Objekts; und

in Abhängigkeit von einer zusätzlichen Benutzereingabe, die ein Modifizieren wenigstens eines geometrischen Parameters des modellierten 3D-Objekts spezifiziert, anzeigen einer 2D-Darstellung des modellierten 3D-Objekts mit dem mindestens einen modifizierten geometrischen Parameter, wobei die dem modellierten 3D-Objekt zugeordneten Bereiche der 2D-Darstellung entsprechend modifiziert werden;

wodurch das modellierte 3D-Objekt als abgebildetes Objekt, jedoch mit wenigstens einem modifizierten geometrischen Parameter erscheint, wenn die Steuerpunkte in Abhängigkeit von der ersten Benutzereingabe im wesentlichen auf entsprechenden Punkten des abgebildeten Objekts plaziert werden.

**11.** Das Verfahren gemäß Anspruch 9, wobei die zweidimensionale (2D) Darstellung ein zweidimensionales (2D) Bitmap-Bild eines 3D-Objekts enthält, wobei ein Teil der 2D-Darstellung das 3D-Objekt darstellt, wobei die 2D-Darstellung des auf die Bildebene projizierten, modellierten 3D-Objekts eine Anzahl von sichtbaren Oberflächenabschnitten in der Bildebene aufweist, wobei das Verfahren ferner enthält:

Zuordnen eines Bereichs des Bildes zu jedem sichtbaren Oberflächenabschnitt des derart projizierten, modellierten 3D-Objekts; und

in Abhängigkeit von einer dritten Benutzereingabe, die ein Modifizieren wenigstens eines geometrischen Parameter des modellierten 3D-Objekts spezifiziert, anzeigen einer 2D-Darstellung des modellierten 3D-Objekts mit wenigstens einem modifizierten geometrischen Parameter, wobei die dem modellierten 3D-Objekt zugeordneten Bereiche des Bildes entsprechend modifiziert werden;

wodurch das modellierte 3D-Objekt als abgebildetes Objekt, jedoch mit wenigstens einem modifizierten geometrischen Parameter erscheint, wenn die Steuerpunkte in Abhängigkeit von der ersten Benutzereingabe im wesentlichen auf die entsprechenden Punkte des abgebildeten Objekts plaziert werden.

**12.** Das Verfahren gemäß Anspruch 11, wobei:

das 2D-Bitmap-Bild eine Version mit geringerer Auflösung von einem ursprünglichen 2D-Bitmap-Bild ist; und das Verfahren ferner den nach Schritt (g) in Abhängigkeit von einer vierten Benutzereingabe ausgeführten Schritt umfaßt, daß die 2D-Darstellung des modellierten 3D-Objekts mit dem wenigstens einen modifizierten geometrischen Parameter mit der Auflösung des ursprünglichen 2D-Bitmap-Bilds angezeigt wird.

**13.** Das Verfahren gemäß Anspruch 11, wobei:

das 2D-Bitmap-Bild eine Version mit geringerer Auflösung von einem ursprünglichen 2D-Bitmap-Bild ist; und das Verfahren ferner den nach Schritt (g) in Abhängigkeit von einer vierten Benutzereingabe ausgeführten Schritt umfaßt, daß die 2D-Darstellung des modellierten 3D-Objekts mit dem wenigstens einen modifizierten geometrischen Parameter in dem ursprünglichen 2D-Bitmap-Bild und mit der Auflösung des ursprünglichen 2D-Bitmap-Bilds angezeigt wird.

**14.** Das Verfahren gemäß Anspruch 13, wobei:

das ursprüngliche 2D-Bitmap-Bild ein farbiges Bild ist; und das in Schritt (a) angezeigte 2D-Bitmap-Bild ein Graustufenbild ist.

**15.** Das Verfahren gemäß Anspruch 11, wobei der Satz von Steuerpunkten die minimale Anzahl von Punkten enthält, die zur eindeutigen Definition des modellierten 3D-Objekts erforderlich sind.

**16.** Das Verfahren gemäß Anspruch 2, wobei der wenigstens eine geometrischer Parameter zu der Gruppe gehört, die aus einer Drehorientierung und geradliniger Position besteht.

**17.** Das Verfahren gemäß Anspruch 2, ferner enthaltend den zusammen mit dem Schritt das Anordnens des Satzes von Steuerpunkten ausgeführten Schritt, daß eine Drahtmodelldarstellung des modellierten 3D-Objekts angezeigt wird, wobei die Steuerpunkte hervorgehoben werden.

**18.** Das Verfahren gemäß Anspruch 1, wobei die zweidimensionale (2D) Darstellung ein zweidimensionales (2D) Bitmap-Bild enthält, welches ein 3D-Objekt darstellt, wobei ein Teil des Bildes das 3D-Objekt darstellt und Bilden einer Zuordnung, umfassend:

Anordnen eines Satzes von Steuerpunkten an zu dem Bild gehörigen Positionen in Abhängigkeit von einer ersten Benutzereingabe, wobei die Positionen ein modelliertes 3D-Objekt eines bestimmten Typs kennzeichnen, wobei das modellierte 3D-Objekt eine Anzahl von sichtbaren Oberflächenabschnitten aufweist; und Zuordnen eines Bereichs des Bildes zu jedem Oberflächenabschnitt des modellierten 3D-Objekts;

wobei das Verfahren in Abhängigkeit von einer zweiten Benutzereingabe, die ein Modifizieren wenigstens eines geometrischen Parameters des modellierten 3D-Objekts spezifiziert, ferner aufweist ein Anzeigen einer 2D-Darstellung des modellierten 3D-Objekts mit wenigstens einem modifizierten geometrischen Parameter, wobei die dem modellierten 3D-Objekt zugeordneten Bereiche des Bildes entsprechend modifiziert werden; wodurch dann, wenn die Steuerpunkte in Abhängigkeit von der ersten Benutzereingabe im wesentlichen an entsprechenden Punkten des abgebildeten Objekts plaziert sind, das modellierte 3D-Objekt in Abhängigkeit von der zweiten Benutzereingabe als abgebildetes Objekt erscheint, jedoch mit wenigstens einem geänderten geometrischen Parameter.

19. Das Verfahren gemäß Anspruch 18, wobei der Satz von Steuerpunkten die minimale Anzahl von Steuerpunkten enthält, die zur eindeutigen Definition der Form und der Orientierung des modellierten 3D-Objekts im 3D-Raum erforderlich ist.

20. Das Verfahren gemäß Anspruch 18, wobei der wenigstens eine geometrische Parameter zu der Gruppe gehört, die aus einer Drehorientierung und einer geradlinigen Position besteht.

21. Das Verfahren gemäß Anspruch 18, ferner den in Verbindung mit dem Schritt der Plazierung eines Satzes von Steuerpunkten ausgeführten Schritt, daß eine Drahtmodelldarstellung des modellierten 3D-Objekts angezeigt wird.

22. Das Verfahren gemäß Anspruch 18, wobei das modellierte 3D-Objekt zu der Gruppe gehört, die aus einem Extrusionskörper, beispielsweise rechtwinkligen Körper, und einem Rotationskörper, beispielsweise Ellipsoid oder Zylinder, besteht.

23. Das Verfahren gemäß Anspruch 18, wobei das Bitmap-Bild eine digitalisierte Fotografie des Objekts enthält.

24. Das Verfahren gemäß Anspruch 18, wobei das Bitmap-Bild eine gerenderte 2D-Projektion eines 3D-Computermodells des Objekts enthält.

25. Das Verfahren gemäß Anspruch 18, wobei das Bitmap-Bild eine Strichzeichnung des Objekts enthält.

26. Das Verfahren gemäß Anspruch 1, wobei ein Bestimmen einer Orientierung und Position ein Erstellen eines Modells eines 3D-Objekts, bezeichnet als modelliertes 3D-Objekt, eines bestimmten Typs enthält, wobei das modellierte 3D-Objekt durch einen Satz von Steuerelementen mit jeweils Koordinaten in drei Dimensionen gekennzeichnet ist, wobei die jeweiligen Koordinaten eine 3D-Position und Orientierung des modellierten 3D-Objekts und einen Satz von Verhältnissen bestimmen, wobei das Verfahren ferner enthält:

Aufnehmen einer eine Verschiebung in der Bildebene bestimmenden Benutzereingabe wenigstens eines Steuerelements, um einen modifizierten Satz von projizierten Steuerelementen zu spezifizieren; Bestimmen, ob der modifizierte Satz von projizierten Elementen mit einer Projektion eines modellierten Objekts des spezifizierten Typs mit möglicherweise modifizierter Position, Orientierung und Proportionen auf der Bildebene konsistent ist; und sofern dies der Fall ist, Bestimmen neuer 3D-Koordinaten für das modellierte 3D-Objekt, die mit dem modifizierten Satz von projizierten Elementen konsistent sind, Projizieren des modellierten 3D-Objekts mit den neuen 3D-Koordinaten auf die Bildebene, um einen neuen Satz von projizierten Elementen zu definieren, und Anzeigen des neuen Satzes von projizierten Elementen.

27. Das Verfahren gemäß Anspruch 26, wobei:

die Steuerelemente Steuerpunkte sind; und

wobei die eine Verschiebung spezifizierende Benutzereingabe Signale umfaßt, die beim Ziehen eines der Steuerpunkte durch den Benutzer mittels eines Zeigegeräts erzeugt werden.

28. Das Verfahren gemäß Anspruch 26, wobei der Satz von Steuerpunkten die minimale Anzahl von Punkten enthält, die zur eindeutigen Definition der Form und Orientierung des modellierten 3D-Objekts im 3D-Raum erforderlich sind.

29. Das Verfahren gemäß Anspruch 26, wobei der Satz von Steuerpunkten mehr als die minimale Anzahl von Punkten enthält, die zur eindeutigen Definition des modellierten 3D-Objekts erforderlich sind.

30. Das Verfahren gemäß Anspruch 26, wobei der Schritt der Anzeige des Satzes von projizierten Kanten und projizierten Steuerpunkten eine Anzeige einer Drahtmodelldarstellung des modellierten 3D-Objekts enthält.

31. Das Verfahren gemäß Anspruch 9, wobei die 2D-Darstellung ein ein 3D-Objekt zeigendes 2D-Bild enthält, wobei ein Bilden einer Zuordnung umfaßt:

Anzeigen eines Drahtmodelldarstellungs-Käfigs, der ein auf die Bildebene projiziertes, modelliertes 3D-Objekt darstellt, wobei der Käfig einen Satz von Steuerelementen aufweist; und
Bilden einer Zuordnung zwischen dem Satz der Steuerelemente des Käfigs und einem entsprechenden Satz von Positionen in der Bildebene in Abhängigkeit von einer Benutzereingabe, wobei die Positionen Sollpositionen in dem Bild für die Steuerelemente des modellierten 3D-Objekts darstellen.

32. Das Verfahren gemäß Anspruch 31, ferner umfassend:

Projizieren wenigstens einiger Elemente und einiger Oberflächenabschnitte des modellierten 3D-Objekts mit der auf diese Weise bestimmten Orientierung und Position auf die Bildebene, wobei das derart projizierte, modellierte 3D-Objekt eine Anzahl von sichtbaren Oberflächenabschnitten in der Bildebene aufweist;
Zuordnen von Bereichen des Bildes zu entsprechenden sichtbaren Oberflächenabschnitten des derart projizierten, modellierten 3D-Objekts; und
in Abhängigkeit von einer zusätzlichen Benutzereingabe, die ein Modifizieren wenigstens eines geometrischen Parameters des modellierten 3D-Objekts spezifiziert, Anzeigen einer 2D-Darstellung des modellierten 3D-Objekts mit wenigstens einem modifizierten geometrischen Parameter, wobei die dem modellierten 3D-Objekt zugeordneten Bereiche des Bildes entsprechend modifiziert werden;

wodurch dann, wenn die Steuerelemente in Abhängigkeit von der ersten Benutzereingabe im wesentlichen an entsprechenden Elemente des abgebildeten Objekts plaziert wurden, das modellierte 3D-Objekt in Abhängigkeit von der weiteren Benutzereingabe als abgebildetes Objekt erscheint, jedoch mit dem wenigstens einen modifizierten geometrischen Parameter.

33. Das Verfahren gemäß Anspruch 32, wobei der Satz von Steuerelementen aus charakteristischen Punkten des modellierten 3D-Objekts besteht.

34. Das Verfahren gemäß Anspruch 33, wobei der Satz von Punkten die minimaler Anzahl von Punkten enthält, die zur eindeutigen Definition von Form und der Orientierung des modellierten 30-Objekts im 3D-Raum erforderlich sind.

**Revendications**

1. Dans un environnement de traitement interactif, procédé de modélisation d'objets tridimensionnels (3D), le procédé comprenant les étapes suivantes :

(a) affichage d'une représentation bidimensionnelle (2D) d'une scène 3D, la représentation 2D définissant un plan d'image ;
(b) en réponse à une entrée de l'utilisateur, établissement d'une correspondance entre un ensemble d'éléments de contrôle d'un objet modélisé en 3D et un ensemble correspondant de positions relatives à la scène, ces positions représentant les positions souhaitées dans la scène pour les éléments de contrôle de l'objet modélisé en 3D ;
(c) détermination, sur la base de la correspondance, d'une orientation et de la position de l'objet modélisé en 3D dans un espace 3D ; et
(d) projection d'au moins quelques éléments de l'objet modélisé en 3D, avec l'orientation et la position, ainsi déterminés, sur le plan de l'image afin de créer une représentation 2D de l'objet modélisé en 3D dans la scène, les éléments de contrôle de l'objet modélisé en 3D étant situés aux positions souhaitées.

2. Procédé de la revendication 1, dans lequel l'établissement d'une correspondance en réponse à l'entrée d'un utilisateur comprend :

en réponse à une première entrée d'un utilisateur, la spécification d'un ensemble de points de contrôle d'un objet modélisé en 3D ; et
en réponse à une deuxième entrée de l'utilisateur, le placement d'un ensemble de points de contrôle à des positions relatives à la scène, ces positions représentant les positions souhaitées dans la scène pour les points de contrôle de l'objet modélisé en 3D.

3. Procédé de la revendication 2, dans lequel l'ensemble de points de contrôle contient le nombre minimal de points requis pour définir de manière unique la forme et l'orientation de l'objet modélisé en 3D dans l'espace 3D.

4. Procédé de la revendication 2, dans lequel lesdites étapes (b) et (c) sont entrelacées.

5. Procédé de la revendication 2, dans lequel ladite étape (b) est réalisée avant ladite étape (c).

6. Procédé de la revendication 2, dans lequel ladite étape (c) est réalisée avant ladite étape (b).

7. Procédé de la revendication 2 comprenant en outre l'étape, réalisée en relation avec ladite étape de placement d'un ensemble de points de contrôle, d'affichage d'une représentation en fil de fer de l'objet modélisé en 3D.

8. Procédé de la revendication 2, dans lequel :

le procédé comprend en outre l'étape d'affichage d'une représentation en fil de fer de l'objet modélisé en 3D, les points de contrôle étant mis en évidence ;
la première entrée de l'utilisateur est réalisée par l'utilisateur à l'aide d'un dispositif de pointage pour faire glisser au moins un point de contrôle d'une position affichée initialement vers la position souhaitée pour ce point de contrôle.

9. Procédé de la revendication 1, dans lequel la détermination d'une orientation et d'une position comprend :

la détermination, sur la base de la correspondance, d'une orientation, d'une forme et d'une position de l'objet modélisé en 3D dans l'espace 3D.

10. Procédé de la revendication 9, dans lequel la représentation en 2D de l'objet modélisé en 3D projetée sur le plan de l'image comporte plusieurs parties superficielles visibles dans le plan de l'image, le procédé comprenant en outre les étapes suivantes :

association de régions de la représentation 2D avec les parties superficielles visibles correspondantes de l'objet modélisé en 3D ainsi projeté ; et
en réponse à une entrée supplémentaire de l'utilisateur, qui spécifie la modification d'au moins un paramètre géométrique de l'objet modélisé en 3D, l'affichage d'une représentation 2D de l'objet modélisé en 3D avec au moins un paramètre géométrique modifié, les régions associées de la représentation 2D de l'objet modélisé en 3D étant modifiées en conséquence ;
moyennant quoi, lorsque les points de contrôle sont placés, en réponse à la première entrée de l'utilisateur, sensiblement sur des points correspondants de l'objet représenté, l'objet modélisé en 3D apparaît comme l'objet représenté, avec au moins un paramètre géométrique modifié.

11. Procédé de la revendication 9, dans lequel la représentation bidimensionnelle (2D) comprend une image bitmap bidimensionnelle (2D) d'un objet 3D, une partie de la représentation 2D représentant l'objet 3D, la représentation 2D de l'objet modélisé en 3D projetée sur le plan de l'image ayant plusieurs parties superficielles visibles sur le plan de l'image, le procédé comprenant en outre les étapes suivantes :

association d'une zone de l'image avec chaque partie superficielle visible de l'objet modélisé en 3D ainsi projeté ; et

en réponse à une troisième entrée de l'utilisateur, qui spécifie la modification d'au moins un paramètre géométrique de l'objet modélisé en 3D, l'affichage d'une représentation 2D de l'objet modélisé en 3D avec au moins un paramètre géométrique modifié, les zones associées de l'image de l'objet modélisé en 3D étant modifiées en conséquence ;

moyennant quoi lorsque les points de contrôle sont placés, en réponse à la première entrée de l'utilisateur, sensiblement sur des points correspondants de l'objet représenté, l'objet modélisé en 3D apparaît comme l'objet représenté avec au moins un paramètre géométrique modifié.

**12.** Procédé de la revendication 11, dans lequel :

l'image bitmap 2D est une version à basse résolution d'une image bitmap 2D originale ; et

le procédé comprend en outre l'étape, réalisée après l'étape (g) en réponse à une quatrième entrée de l'utilisateur, d'affichage, à la résolution de l'image bitmap 2D originale, de la représentation 2D de l'objet modélisé en 3D avec au moins un paramètre géométrique modifié.

**13.** Procédé de la revendication 11, dans lequel :

l'image bitmap 2D est une version à basse résolution d'une image bitmap 2D originale ; et

le procédé comprend en outre l'étape, réalisée après l'étape (g) en réponse à une quatrième entrée de l'utilisateur, d'affichage, dans l'image bitmap 2D originale et à la résolution de l'image bitmap 2D originale, de la représentation 2D de l'objet modélisé en 3D avec au moins un paramètre géométrique modifié.

**14.** Procédé de la revendication 13 dans lequel :

l'image bitmap 2D originale est une image en couleurs ; et

l'image bitmap 2D affichée à l'étape (a) est une image en niveaux de gris.

**15.** Procédé de la revendication 11, dans lequel l'ensemble de points de contrôle contient le nombre minimal de points nécessaires pour définir de manière unique l'objet modélisé en 3D.

**16.** Procédé de la revendication 2, dans lequel ledit au moins un paramètre géométrique se trouve dans le groupe constitué de l'orientation rationnelle et de la position rectiligne.

**17.** Procédé de la revendication 2 comprenant en outre l'étape, réalisée en relation avec ladite étape de placement de l'ensemble de points de contrôle, d'affichage d'une représentation en fil de fer de l'objet modélisé en 3D, les points de contrôle étant mis en évidence.

**18.** Procédé de la revendication 1, dans lequel la représentation bidimensionnelle (2D) comprend une image bitmap bidimensionnel (2D) représentant un objet 3D, une partie de l'image représentant l'objet 3D et l'établissement d'une correspondance comprenant :

en réponse à une première entrée de l'utilisateur, le placement d'un ensemble de points de contrôle à des positions relatives à l'image, ces positions caractérisant un objet modélisé en 3D d'un type spécifié, l'objet modélisé en 3D ayant plusieurs parties superficielles visibles ; et

l'association d'une zone de l'image avec chaque partie superficielle de l'objet modélisé en 3D ;

le procédé comprenant en outre, en réponse à une deuxième entrée de l'utilisateur qui spécifie la modification d'au moins un paramètre géométrique de l'objet modélisé en 3D, l'affichage d'une représentation 2D de l'objet modélisé en 3D, ledit au moins un paramètre géométrique étant modifié, les zones associées de l'image de l'objet modélisé en 3D étant modifiés en conséquence ;

moyennant quoi, lorsque les points de contrôle sont placés, en réponse à la première entrée de l'utilisateur, sensiblement sur des points correspondants de l'objet représenté, l'objet modélisé en 3D apparaît, en réponse à la deuxième entrée de l'utilisateur, comme l'objet représenté, mais avec au moins un paramètre géométrique modifié.

EP 1 008 112 B1

**19.** Procédé de la revendication 18, dans lequel l'ensemble de points de contrôle contient le nombre minimal de points nécessaire pour définir de manière unique la forme et l'orientation de l'objet modélisé en 3D dans un espace 3D.

**20.** Procédé de la revendication 18, dans lequel ledit au moins un paramètre géométrique se trouve dans le groupe constitué de l'orientation en rotation et de la position rectiligne.

**21.** Procédé de la revendication 18 comprenant en outre l'étape, réalisée en relation avec ladite étape de placement d'un ensemble de points de contrôle, d'affichage d'une représentation en fil de fer de l'objet modélisé en 3D.

**22.** Procédé de la revendication 18, dans lequel l'objet modélisé en 3D se trouve dans le groupe constitué d'un volume d'extrusion, tel qu'un volume rectangulaire, et d'un volume de révolution, tel qu'une ellipsoïde ou un cylindre.

**23.** Procédé de la revendication 18, dans lequel l'image bitmap comprend une photographie numérique de l'objet.

**24.** Procédé de la revendication 18, dans lequel l'image bitmap comprend une projection 2D d'un modèle informatique 3D de l'objet.

**25.** Procédé de la revendication 18, dans lequel l'image bitmap comprend un dessin au trait représentant l'objet.

**26.** Procédé de la revendication 1, dans lequel la détermination d'une orientation et d'une position comprend la création d'un modèle d'objet en 3D, appelé objet modélisé en 3D, d'un type spécifié, l'objet modélisé en 3D étant **caractérisé par** un ensemble d'éléments de contrôle ayant des coordonnées respectives dans les trois dimensions, ces coordonnées respectives définissant une position et une orientation 3D de l'objet modélisé en 3D et un ensemble de proportions, le procédé comprenant en outre les étapes suivantes :

la réception d'une entrée de l'utilisateur spécifiant le déplacement, dans le plan de l'image, d'au moins un des éléments de contrôle afin de spécifier un ensemble modifié d'éléments de contrôle projetés ;
la détermination permettant de savoir si l'ensemble modifié d'élément projetés est cohérent avec une projection d'un objet modélisé du type spécifié, avec une position, une orientation et des proportions éventuellement modifiées, sur le plan de l'image ; et
si la réponse est oui
la détermination de nouvelles coordonnées 3D pour l'objet modélisé en 3D, correspondant à l'ensemble modifié d'éléments projetés ;
la projection de l'objet modélisé en 3D avec les nouvelles coordonnées 3D sur le plan de l'image pour définir un nouvel ensemble d'éléments projetés ; et
l'affichage du nouvel ensemble d'éléments projetés.

**27.** Procédé de la revendication 26, dans lequel :

les éléments de contrôle sont des points de contrôle ; et
ladite entrée de l'utilisateur, spécifiant le déplacement, comprend des signaux générés par un dispositif de pointage lorsque l'utilisateur fait glisser l'un des points de contrôle.

**28.** Procédé de la revendication 26, dans lequel l'ensemble de points de contrôle contient le nombre minimal de points nécessaire pour définir de manière unique la forme et l'orientation de l'objet modélisé en 3D dans l'espace 3D.

**29.** Procédé de la revendication 26, dans lequel l'ensemble de points de contrôle contient plus que le nombre minimal de points nécessaire pour définir de manière unique l'objet modélisé en 3D.

**30.** Procédé de la revendication 26, dans lequel ladite étape d'affichage de l'ensemble d'arêtes et de points de contrôle projetés comprend l'affichage d'une représentation en fil de fer de l'objet modélisé en 3D.

**31.** Procédé de la revendication 9, dans lequel la représentation 2D comprend une image 2D représentant un objet 3D, dans lequel l'établissement d'une correspondance comprend les étapes suivantes :

l'affichage d'une cage de fil de fer représentant un objet modélisé en 3D projeté sur le plan de l'image, la cage ayant un ensemble d'éléments de contrôle ; et
en réponse à une entrée de l'utilisateur, l'établissement d'une correspondance entre l'ensemble d'éléments

**41**

de contrôle de la cage et un ensemble correspondant de positions dans le plan de l'image, ces positions représentant les positions souhaitées dans l'image pour les éléments de contrôle de l'objet modélisé en 3D.

32. Procédé de la revendication 31, comprenant en outre les étapes suivantes :

la projection d'au moins quelques éléments et de quelques parties superficielles de l'objet modélisé en 3D, avec l'orientation et la position ainsi déterminées, sur le plan de l'image, l'objet modélisé en 3D ainsi projeté ayant plusieurs parties superficielles visibles sur le plan de l'image ;
l'association de zones de l'image avec des parties superficielles visibles correspondantes de l'objet modélisé en 3D ainsi projeté ; et
en réponse à une entrée supplémentaire de l'utilisateur, qui spécifie la modification d'au moins un paramètre géométrique de l'objet modélisé en 3D, l'affichage d'une représentation 2D de l'objet modélisé en 3D avec au moins un paramètre géométrique modifié, les zones associées de l'image de l'objet modélisé en 3D étant modifiées en conséquence ;
moyennant quoi, lorsque les éléments de contrôle sont placés, en réponse à la première entrée de l'utilisateur, sensiblement sur des éléments correspondants de l'objet représenté, l'objet modélisé en 3D apparaît, en réponse à l'entrée supplémentaire de l'utilisateur, comme l'objet représenté, mais avec au moins un paramètre géométrique modifié.

33. Procédé de la revendication 32, dans lequel l'ensemble d'éléments de contrôle sont des points caractéristiques de l'objet modélisé en 3D.

34. Procédé de la revendication 33, dans lequel l'ensemble de points contient le nombre minimal de points nécessaire pour définir de manière unique la forme et l'orientation de l'objet modélisé en 3D dans l'espace 3D.

PROCESSOR 12 · HARD DISK 46 · FLOPPY DISK 47 · CD-ROM 48 · 25 · 15 · RAM 30 · ROM 32 · 17 · KEYBOARD 40 · PTG DEVICE 42 · SCANNER 43 · 20 · DISP CTLR 44 · DISPLAY 45 · 22 · PRINTER 23 · 10

## FIG. 1 (PRIOR ART)

Orbit Camera

Dolly Camera

Slide Camera in x

Slide Camera in y

210 FreeD Virtual Camera

## FIG. 11

FIG. 2A

FIG. 2B

Legend
● Here
○ Not Here

FIG. 2C

FIG. 2D

FIG. 2E

FIG. 2F

FIG. 2G

FIG. 3A

FIG. 3B

127

130

Real
Image Plane

Virtual
Image Plane

125    Object

120

Viewpoint
O

122

f          f

FIG. 4A

130

Image Plane

x          (x, y)

X          y

f          Z

X          Y

O
Viewpoint

FIG. 4B

FIG. 4C

FIG. 4D

FIG. 4E

FIG. 5A

FIG. 5B

FIG. 5C

FIG. 6A

FIG. 6B

FIG. 6C

FIG. 7A

FIG. 7B

FIG. 7C

FIG. 8

FIG. 9

Construction Mode Tool Bar

200

FIG. 10

Manipulation Mode Tool Bar

205

| Cursor Appearance After Invoking Specified Tool ||
|---|---|
| ▷ | Selection tool (when not on cage edge or handle). |
| ▶ | Selection tool (when on cage edge). |
| + | Selection tool (when on handle). |
| ▸ | Selection tool (appears when dragging; shows position that will result on button release). |
| ⊕🔍 | Magnify tool. |
| ⊖🔍 | Magnify tool (while pressing ALT key). |
| ↻ | Rotate tool. |
| ✛ | Move tool. |
| ◹⊕ | Add Smooth Handle tool. |
| ◹⊕ | Add Sharp Handle tool. |
| ◹⊟ | Delete Handle tool. |
| ◹◇○ | Add Smooth/Sharp Handle tool (when positioned over sharp/smooth handle). |
| 🎥 | Move (Dolly) Camera tool. |
| 🎥 | Orbit the Scene tool. |
| 🎥 | Slide Camera tool. |
| ⋈🎥 | Field of View Angle tool. |
| 🎥 | Center Point tool. |

# FIG. 12

**FIG. 13A**

**FIG. 13B**

FIG. 14A

FIG. 14B

FIG. 14C

FIG. 14D

FIG. 15A

FIG. 15B

FIG. 15C

300

"FilterSelectorStart"
from Photoshop

310

Downsample and
convert image to
grayscale

320

Initialize geometry
database

330

Open interaction
window and initialize
user interface

340

Event
loop

FIG. 16A

FIG. 16B

FIG. 16C

FIG. 17A

FIG. 17B

FIG. 17C